(19)

Europäisches
Patentamt
European
Patent Office
Office européen
des brevets

(11) **EP 4 734 162 A1**

(12) **EUROPEAN PATENT APPLICATION**

(43) Date of publication:
**29.04.2026  Bulletin 2026/18**

(21) Application number: **25208881.0**

(22) Date of filing: **15.10.2025**

(51) International Patent Classification (IPC):
*H01M 4/04* (2006.01)   *H01M 4/133* (2010.01)
*H01M 4/134* (2010.01)   *H01M 4/36* (2006.01)
*H01M 4/583* (2010.01)   *H01M 10/0525* (2010.01)
*H01M 4/38* (2006.01)

(52) Cooperative Patent Classification (CPC):
**H01M 4/133; H01M 4/04; H01M 4/134;**
**H01M 4/362; H01M 4/38; H01M 4/583;**
**H01M 10/0525;** H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **24.10.2024  KR 20240146455**

(71) Applicant: SAMSUNG SDI CO., LTD.
**Yongin-si, Gyeonggi-do 17084 (KR)**

(72) Inventors:
• **LEE, Jangwook**
  **17084 Yongin-si, Gyeonggi-do (KR)**
• **OH, Seunghyun**
  **17084 Yongin-si, Gyeonggi-do (KR)**
• **LEE, Bohyung**
  **17084 Yongin-si, Gyeonggi-do (KR)**
• **HAN, Jiwon**
  **17084 Yongin-si, Gyeonggi-do (KR)**

(74) Representative: **Michalski Hüttermann & Partner**
**Patentanwälte mbB**
**Kaistraße 16A**
**40221 Düsseldorf (DE)**

(54) **NEGATIVE ELECTRODE FOR ALL-SOLID-STATE BATTERY, METHOD OF PREPARING COATING SLURRY, AND ALL-SOLID-STATE BATTERY**

(57)    Disclosed are negative electrodes for all-solid-state batteries, methods of preparing coating slurry, and all-solid-state batteries. The negative electrode includes a negative electrode current collector and a coating layer on the negative electrode current collector. The coating layer includes a carbon-based material and a metal particle. The metal particle includes a lithiophilic metal. An average particle diameter of the metal particle is in a range of $\geq 10$ nm to $\leq 200$ nm. A standard deviation of a particle diameter of the metal particle is equal to or less than 50% of the average particle diameter.

FIG. 1

EP 4 734 162 A1

# EP 4 734 162 A1

## Description

### CROSS-REFERENCE TO RELATED APPLICATION

This application claims priority to Korean Patent Application No. 10-2024-0146455 filed on October 24, 2024 in the Korean Intellectual Property Office.

### BACKGROUND

The present disclosure relates to a negative electrode for an all-solid-state battery, a method of preparing a coating slurry, and an all-solid-state battery.

Development of high-energy density and safe batteries is driven by industrial demands. For example, lithium ion batteries are being commercialized not only in formation-related and communication devices but also in the automotive industry. In the automotive industry, safety is relevant to human safety.

An all-solid-state battery uses a solid electrolyte in place of a liquid electrolyte. As an all-solid-state battery does not use a flammable organic dispersion medium, the possibility of fire or explosion may be significantly reduced even in the event of short-circuit. Accordingly, an all-solid-state battery may significantly increase safety compared to a lithium ion battery using a liquid electrolyte.

### SUMMARY

An example embodiment of the present disclosure includes a negative electrode for an all-solid-state battery capable of improving lifetime characteristics.

An example embodiment of the present disclosure includes a method of preparing a coating slurry capable of improving lifetime characteristics.

According to an example embodiment of the present disclosure, a negative electrode for an all-solid-state battery may include a negative electrode current collector, and a coating layer on the negative electrode current collector. The coating layer may include a carbon-based material and a metal particle. The metal particle may include a lithiophilic metal. An average particle diameter of the metal particle may be in a range of $\geq 10$ nm to $\leq 200$ nm. A standard deviation of a particle diameter of the metal particle may be equal to or less than 50% of the average particle diameter.

According to an example embodiment of the present disclosure, a method of preparing a coating slurry may include adding a carbon-based material, a metal particle, and a first binder to a solvent to form a first mixture, using a mixer to mix the first mixture, and using a high-pressure disperser to allow the first mixture to undergo a high-pressure dispersion process to form a dispersion. The high-pressure dispersion process may include pressurizing the first mixture at a pressure in a range of $\geq 2,000$ psi to $\leq 30,000$ psi, and allowing the pressurized first mixture to pass through a micro-channel. An average particle diameter of the metal particle in the dispersion may be in a range of $\geq 10$ nm to $\leq 200$ nm. A standard deviation of a particle diameter of the metal particle in the dispersion may be equal to or less than 50% of the average particle diameter.

According to an example embodiment of the present disclosure, an all-solid-state battery may include the negative electrode discussed above, a positive electrode, and a solid electrolyte layer between the negative electrode and the positive electrode.

### BRIEF DESCRIPTION OF DRAWINGS

FIG. 1 illustrates a plan view showing an all-solid-state battery according to an example embodiment of the present disclosure.

FIG. 2A illustrates a cross-sectional view taken along line A-A' of FIG. 1.

FIG. 2B illustrates a cross-sectional view taken along line B-B' of FIG. 1.

FIG. 3 illustrates a cross-sectional view taken along line A-A' of FIG. 1, showing an all-solid-state battery according to an example embodiment of the present disclosure.

FIG. 4 illustrates a cross-sectional view showing section "M" of FIG. 2A.

FIG. 5 illustrates an enlarged cross-sectional view of section "M" depicted in FIG. 2A, showing a coating layer according to a comparative example of the present disclosure.

FIG. 6 illustrates an enlarged cross-sectional view of section "M" depicted in FIG. 2A, showing a coating layer according to an example embodiment of the present disclosure.

FIG. 7 illustrates a perspective view showing an all-solid-state battery system according to an example embodiment of the present disclosure.

FIG. 8 illustrates a flow chart showing a method of preparing a coating slurry according to an example embodiment of the present disclosure.

FIGS. 9, 10, and 11 illustrate diagrams showing steps of the preparation method shown in FIG. 8.

FIG. 12 illustrates a graph showing results of counting the number of aggregations in a coating layer according to some examples and comparative examples.

FIGS. 13A and 13B respectively illustrate a cross-sectional SEM image and a surface SEM image showing a coating layer of Embodiment 1.

FIGS. 14A and 14B respectively illustrate a cross-sectional SEM image and a surface SEM image showing a coating layer of Comparative 1.

FIGS. 15A and 15B respectively illustrate a cross-sectional SEM image and a surface SEM image showing a coating layer of Comparative 7.

FIG. 16 illustrates a cross-sectional SEM image and a carbon EDS mapping image of a coating layer in Embodiment 1.

FIG. 17 illustrates a cross-sectional SEM image and a carbon EDS mapping image of a coating layer in Comparative 1.

FIG. 18 illustrates a cross-sectional SEM image of a coating layer in Comparative 7.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions exemplarily illustrated in the drawings have general properties, and shapes of regions exemplarily illustrated in the drawings are used to exemplarily disclose specific shapes but not limited to the scope of the present disclosure. It is understood that, although the terms "first", "second", "third," and the like, may be used herein to describe various elements, these elements should not be limited by these terms. These terms are only used to distinguish one element from another element. The example embodiments explained and illustrated herein include complementary embodiments thereof.

The terms in this description are merely used to describe various embodiments, but are not intended to limit the present disclosure. Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

Unless otherwise especially defined in this description, a particle diameter may be an average particle diameter. In addition, a particle diameter indicates an average particle diameter ($D_{50}$) of particles having a cumulative volume of about 50 vol% in particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and an average particle diameter ($D_{50}$) value may then be obtained through a calculation. Dissimilarly, a laser scattering method may be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

In an example embodiment, in this description, the average particle diameter may refer to a diameter measured by randomly or non-systematically selecting 100 or more particles from an electron microscope image. Alternatively, in this description, the average particle diameter may be measured using a particle size analyzer and may refer to a diameter of a particle having a cumulative volume of about 50 vol% in particle size distribution.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

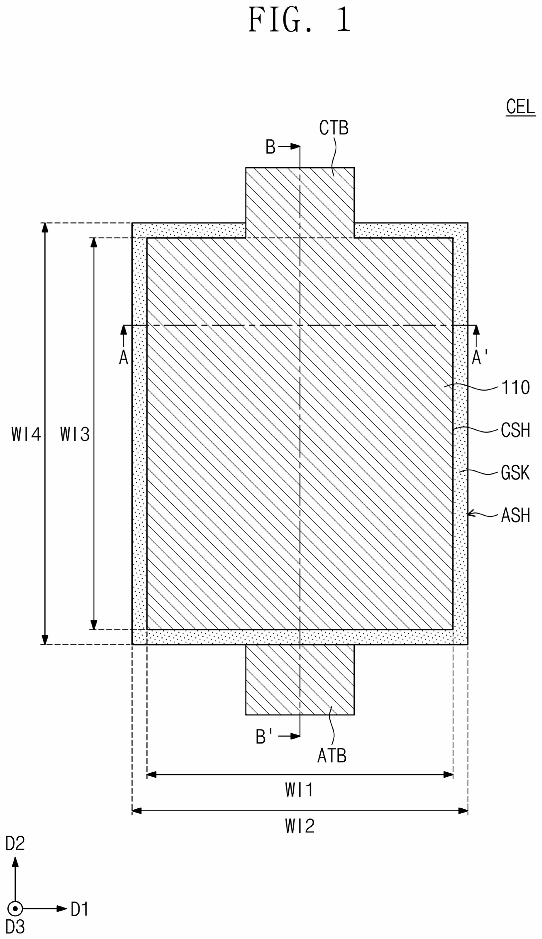

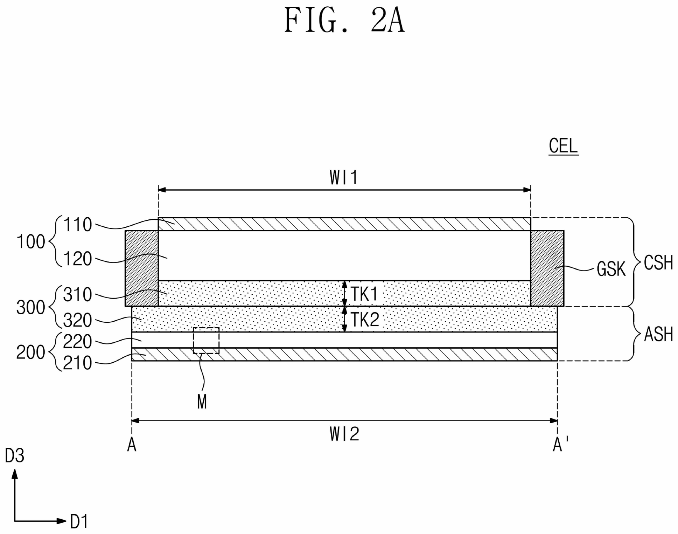

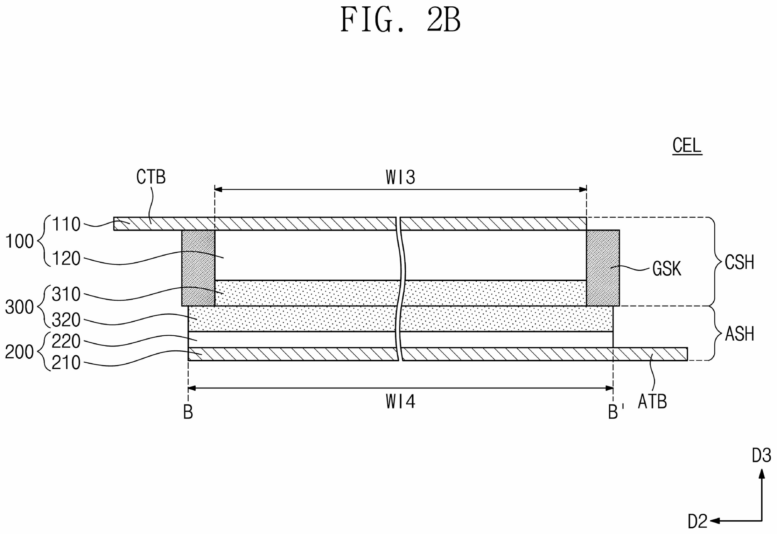

FIG. 1 illustrates a plan view showing an all-solid-state battery according to an example embodiment of the present disclosure. FIG. 2A illustrates a cross-sectional view taken along line A-A' of FIG. 1. FIG. 2B illustrates a cross-sectional view taken along line B-B' of FIG. 1.

Referring to FIGS. 1, 2A, and 2B, a unit cell CEL of an all-solid-state battery according to the present disclosure may include a positive electrode layer 100, a negative electrode layer 200 opposite to the positive electrode layer 100, and a solid electrolyte layer 300 disposed between the positive electrode layer 100 and the negative electrode layer 200. The present disclosure, however, is not limited thereto, and the unit cell CEL may further include an additional functional layer, such as an adhesion enhancement layer, disposed between the positive electrode layer 100 and the solid electrolyte layer 300, or between the negative electrode layer 200 and the solid electrolyte layer 300.

The positive electrode layer 100 according to an example embodiment of the present disclosure may include a positive electrode current collector 110, and a positive electrode active material layer 120 disposed on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from that shown in FIG. 1, in an example embodiment of the present disclosure, the positive electrode current collector 110 may not be provided. Although not shown, to increase adhesion between the positive electrode current collector 110 and the positive electrode active material layer 120, a carbon layer having a thickness in a range of $\geq$ 0.1 $\mu$m to $\leq 4$ $\mu$m may further be disposed between the positive electrode current collector 110 and the positive electrode active material layer 120.

The positive electrode active material of the positive electrode active material layer 120 may include a material that can reversibly absorb and desorb lithium ions. The positive electrode active material may include a plurality of particles. For example, the positive electrode active material may include at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be used alone or in a mixture of two or more substances.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$, and $0 < \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 (half) of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0<x<1$, $0<y<1$, $0<z<1$, and $x+y+z=1$). When the positive electrode active material includes a ternary lithium transition metal oxide having the layered rock salt type structure, the unit cell CEL may have increased energy density and improved thermal stability.

The compound included in the positive electrode active material may be covered with a coating layer (not shown). The positive electrode active material may be used in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be determined within any methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the unit cell CEL may increase to reduce metal elution from the positive electrode active material in a charged state. Therefore, the unit cell CEL may improve in cycle characteristics in a charged state. The language "cycle characteristics" may refer to properties that indicate the degree to which the unit cell CEL is degraded due to charge and discharge. For example, the unit cell CEL with high cycle characteristics may degrade less due to charge and discharge, while the unit cell CEL with low cycle characteristics may degrade more due to charge and discharge.

The positive electrode active material may have, for example, a spherical or oval particle shape. There is no limitation on a particle diameter and an amount of the positive electrode active material.

The solid electrolyte of the positive electrode active material layer 120 may have a particle shape. The solid electrolyte may be dispersed between the positive electrode active materials. The solid electrolyte may include a sulfide-based solid electrolyte with desired or improved lithium ionic conductivity. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes at least one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes at least one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a-c}M_aPS_{6-c}X_c$ (where $0 \leq a \leq 2$ and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of $\geq 1.5$ g/cc to $\leq 2.0$ g/cc. As the argyrodite-type solid electrolyte has a density that is equal to or greater than 1.5 g/cc, it may be possible to decrease an internal resistance of an all-solid-state battery and to hinder or prevent a solid electrolyte layer from short-circuit and penetration caused by the formation of lithium dendrites. The solid electrolyte may have an elastic modulus in a range of, for example, about 15 GPa to $\leq 35$ GPa.

The solid electrolyte in the positive electrode active material layer 120 may have an average particle diameter that is less than the average particle diameter of first and second electrolytes in the solid electrolyte layer 300 which is discussed below. For example, the average particle diameter of the solid electrolyte in the positive electrode active material layer 120 may be about equal to or less than 90%, 80%, 70%, 60%, 50%, 40%, 30%, or 20% of the average particle diameter of a solid electrolyte included in the solid electrolyte layer 300. The average particle diameter may be a median diameter measured with a laser-type particle size distribution analyzer.

The positive electrode active material layer 120 may include a conductive material. The conductive material may have conductivity without causing a chemical change to the unit cell CEL to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may combine the positive electrode active material, the solid electrolyte, and the conductive material together in the positive electrode active material layer 120. The binder may include a material that improves adhesion between the positive electrode active material layer 120 and the positive electrode current collector 110. For example, the binder may include at least one of polyvinylidenefluoride, styrene-butadiene rubber (SBR), polytetrafluoroethylene, polyvinylidenefluoride, vinylidenefluoride/hexafluoropropylene copolymer, polyacrylonitrile, and polymethylmethacrylate.

Based on the total 100 parts by weight of the positive electrode active material, the solid electrolyte, the conductive material, and the binder, the positive electrode active material may be included in an amount in a range of $\geq 85$ parts by weight to $\leq 92$ parts by weight in the positive electrode active material layer 120. Based on the total 100 parts by weight of the positive electrode active material, the solid electrolyte, the conductive material, and the binder, the binder may be included in an amount in a range of $\geq 0.5$ parts by weight to $\leq 1.5$ parts by weight in the positive electrode active material layer 120.

Based on 100 parts by weight of the solid electrolyte, the conductive material may be included in an amount in a range of $\geq 1$ part by weight to $\leq 50$ parts by weight in the positive electrode active material layer 120. When the conductive material is included in an amount that is less than about 1 part by weight relative to 100 parts by weight of the solid electrolyte, a proportion of the conductive material may decrease to reduce an electrical conductivity of the positive electrode active material layer 120. When the conductive material is included in an amount that is greater than 50 parts by weight relative to 100 parts by weight of the solid electrolyte, a proportion of the conductive material may excessively increase to cause incomplete formation of a coating layer that covers a surface of the solid electrolyte.

The positive electrode active material layer 120 may further include at least one of an additive, such as a filler, a coating agent, a dispersant, and an ionic conductivity agent, in addition to the positive electrode active material, the solid electrolyte, the conductive material, and the binder.

The negative electrode layer 200 may include a negative electrode current collector 210 and a coating layer 220 on the negative electrode current collector 210. The negative electrode current collector 210 may provide a reference surface on which the coating layer 220 is disposed. The negative electrode current collector 210 may include a material that does not react with lithium, for example, a material that does not form an alloy or a compound with lithium. For example, the negative electrode current collector 210 may include at least one of copper (Cu), stainless steel, titanium (Ti), iron (Fe), cobalt (Co), nickel (Ni), and an alloy thereof. For example, a thickness of the negative electrode current collector 210 may range from $\geq 1$ $\mu$m to $\leq 20$ $\mu$m, from $\geq 5$ $\mu$m to $\leq 15$ $\mu$m, or from $\geq 7$ $\mu$m to $\leq 10$ $\mu$m.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may not be provided.

The coating layer 220 may induce growth of lithium metal between the coating layer 220 and the negative electrode current collector 210 when the unit cell CEL is charged. The coating layer 220 may constitute a protection layer for lithium metal and may simultaneously or contemporaneously reduce or suppress precipitation and growth of lithium dendrites.

The coating layer 220 may include metal and carbon. For example, the coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The coating layer 220 may include at least one carbon such as or including at least one of carbon black, acetylene black, furnace black, ketjen black, and graphene. In an example embodiment, the coating layer 220 may include a mixture (or composite) of carbon black and silver (Ag).

The coating layer 220 may further include an additive in addition to metal and carbon. The coating layer 220 may include at least one additive such as or including at least one of, for example, a binder, a filler, a coating agent, a dispersant, and an ionic conductivity agent.

The coating layer 220 may have a thickness that is less than the thickness of the positive electrode active material layer 120. For example, the coating layer 220 may have a thickness that is equal to or less than 50%, 40%, 30%, 20%, 10%, or 5% of the thickness of the positive electrode active material layer 120. The thickness of the coating layer 220 may range, for example, from $\geq 1$ $\mu$m to $\leq 100$ $\mu$m, from $\geq 2$ $\mu$m to $\leq 80$ $\mu$m, from $\geq 10$ $\mu$m to $\leq 50$ $\mu$m, or from $\geq 5$ $\mu$m to $\leq 20$ $\mu$m. When the coating layer 220 has an excessively small thickness, lithium dendrites formed between the coating layer 220 and the negative electrode current collector 210 may collapse the coating layer 220 and reduce cycle characteristics of the unit cell CEL. When the coating layer 220 has an excessively large thickness, the unit cell CEL may have a reduced energy density, and an internal resistance of the unit cell CEL may increase due to the coating layer 220, thereby reducing cycle characteristics of the unit cell CEL.

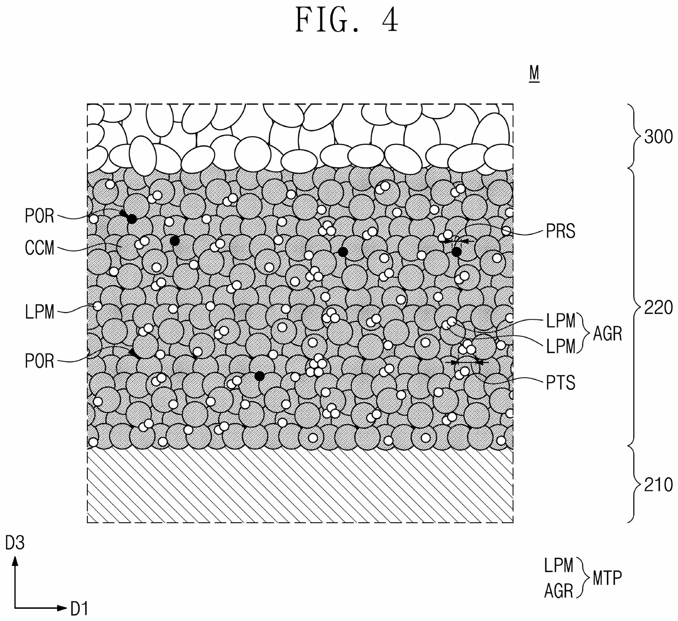

Although not shown, a carbon layer may further be included to increase adhesion between the coating layer 220 and the solid electrolyte layer 300. The coating layer 220 according to an example embodiment of the present disclosure is further discussed in detail below with reference to FIG. 4.

The solid electrolyte layer 300 may be provided between the positive electrode layer 100 and the negative electrode layer 200. The solid electrolyte layer 300 may include a sulfide-based solid electrolyte with desired or improved lithium ionic conductivity. The solid electrolyte included in the solid electrolyte layer 300 may include a material that is the same as or different from the material of the solid electrolyte included in the positive electrode active material layer 120.

The solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

Referring to FIG. 2A, the first solid electrolyte layer 310 may include a first solid electrolyte. The first solid electrolyte may have a spherical or oval particle shape. The first solid electrolyte may include a sulfide-based solid electrolyte. The first solid electrolyte may be in an amorphous state, a crystalline state, or a mixed state of amorphous and crystalline states. The solid electrolyte may include at least sulfur (S), phosphorus (P), and lithium (Li) among component elements included in the sulfide-based solid electrolyte mentioned above. For example, the solid electrolyte may be or include a material including $Li_2S-P_2S_5$. When $Li_2S-P_2S_5$ is utilized as the sulfide-based solid electrolyte material of the solid electrolyte, a mixing molar ratio of $Li_2S$ and $P_2S_5$ may be in a range of $\geq 50:50$ to $\leq 90:10$.

In an example embodiment, the first solid electrolyte may include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the first solid electrolyte may include an argyrodite-type compound including $Li_{7-a-c}M_aPS_{6-c}X_c$. In the chemical formula above, X may be or include at least one of Cl, Br, or a combination thereof. M may be or include at least one of Na, K, Fe, Mg, Ca, Ag, Cu, Zr, Zn, or a combination thereof. The subscripts "a" and "c" may each be a real number in a range of 0 and 2.

The argyrodite-type solid electrolyte may have a density in a range of $\geq 1.5$ g/cc to $\leq 2.0$ g/cc. As the argyrodite-type solid electrolyte has a density of equal to or greater than 1.5 g/cc, it may be possible to decrease an internal resistance of an all-solid-state battery and to hinder or prevent a solid electrolyte layer from short-circuit and penetration caused by the formation of lithium dendrites. The first solid electrolyte may have a modulus in a range of, for example, about 15 GPa to $\leq$ 35 GPa.

The first solid electrolyte layer 310 may further include a binder. The binder included in the first solid electrolyte layer 310 may include, for example, at least one of styrene-butadiene rubber (SBR), polytetrafluoroethylene, polyvinylidenefluoride, or polyethylene, but the present disclosure is not limited thereto. The binder of the first solid electrolyte layer 310 may be the same as or different from the binder of the positive electrode active material layer 120 or that of the coating layer 220.

The second solid electrolyte layer 320 may include a second solid electrolyte. The second solid electrolyte may have a spherical or oval particle shape.

The second solid electrolyte may include a sulfide-based solid electrolyte. A description of the second solid electrolyte may be the same as or similar to the description of the first solid electrolyte. In an example embodiment, the second solid electrolyte may have substantially the same composition as the first solid electrolyte. Alternatively, the second solid electrolyte may have a similar composition to the first solid electrolyte.

The second solid electrolyte may be in direct contact with the coating layer 220. Thus, the second solid electrolyte may reduce or suppress lithium dendrites formed between the coating layer 220 and the negative electrode current collector 210. The second solid electrolyte may effectively reduce or suppress negative electrode side reactions. Therefore, the all-solid-state battery according to examples of the present disclosure may improve in cell performance.

The first solid electrolyte layer 310 may have a first thickness TK1, and the second solid electrolyte layer 320 may have a second thickness TK2. The first thickness TK1 and the second thickness TK2 may be the same as, or different from, each other. In an example embodiment, the first thickness TK1 may be greater than the second thickness TK2. For example, the first thickness TK1 may be in a range of $\geq 1.1$ to 5 times the second thickness TK2.

Referring back to FIGS. 1, 2A, and 2B, the positive electrode layer 100 and the first solid electrolyte layer 310 may constitute a positive electrode mixture layer CSH. The negative electrode layer 200 and the second solid electrolyte layer 320 may constitute a negative electrode mixture layer ASH. The positive electrode mixture layer CSH may be stacked on the negative electrode mixture layer ASH.

The negative electrode mixture layer ASH and the positive electrode mixture layer CSH may have different areas from each other. For example, the area of the negative electrode mixture layer ASH may be greater than the area of the positive electrode mixture layer CSH. The positive electrode mixture layer CSH may completely inwardly overlap the negative electrode mixture layer ASH.

In an example embodiment of the present disclosure, the first solid electrolyte layer 310 may have substantially the same area as the positive electrode layer 100. The second solid electrolyte layer 320 may have substantially the same area as the negative electrode layer 200.

For example, the positive electrode mixture layer CSH may have a first width WI1 in a first direction D1. The negative electrode mixture layer ASH may have a second width WI2 in the first direction D1. The first width WI1 may be less than the second width WI2. The positive electrode mixture layer CSH may have a third width WI3 in a second direction D2. The negative electrode mixture layer ASH may have a fourth width WI4 in the second direction D2. The third width WI3 may be less than the fourth width WI4.

The unit cell CEL according to the present example embodiment may be fabricated by forming the negative electrode mixture layer ASH on a first carrier film, forming the positive electrode mixture layer CSH on a second carrier film, and then laminating the negative electrode mixture layer ASH and the positive electrode mixture layer CSH.

The unit cell CEL according to the present example embodiment may further include a gasket GSK. The gasket GSK may surround the positive electrode mixture layer CSH. A difference in area between the negative electrode mixture layer ASH and the positive electrode mixture layer CSH may produce a step difference on a lateral surface of the unit cell CEL, and the gasket GSK may fill the step difference. The gasket GSK may surround four lateral surfaces of the positive electrode mixture layer CSH. For example, a thickness of the gasket GSK may be substantially the same as, or less than, the thickness of the positive electrode mixture layer CSH. In an example embodiment, the positive electrode current collector 110 may reside at a height (or level) higher than the gasket GSK.

The positive electrode current collector 110 may include a positive electrode tab CTB. The positive electrode tab CTB may be or include a protruding region of the positive electrode current collector 110. In an example embodiment, the positive electrode tab CTB may protrude in the second direction D2.

The negative electrode current collector 210 may include a negative electrode tab ATB. The negative electrode tab ATB may be or include a protruding region of the negative electrode current collector 210. In an example embodiment, the negative electrode tab ATB may protrude in a direction opposite to the second direction D2.

In the example embodiment that follows, a detailed description of technical features repetitive to those discussed above with reference to FIGS. 1, 2A, and 2B are omitted, and a difference thereof are discussed in detail.

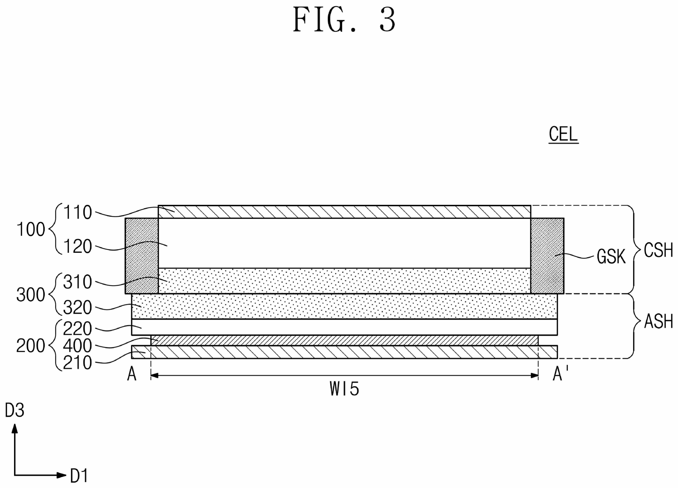

FIG. 3 illustrates a cross-sectional view taken along line A-A' of FIG. 1, showing an all-solid-state battery according to an example embodiment of the present disclosure. Referring to FIG. 3, the negative electrode layer 200 of the unit cell CEL may further include a lithium metal layer 400 between the negative electrode current collector 210 and the coating layer 220. The lithium metal layer 400 may have an increased thickness when the unit cell CEL is charged. The coating layer 220 may constitute a protection layer for the lithium metal layer 400 and may simultaneously or contemporaneously reduce or suppress growth of lithium dendrites from the lithium metal layer 400.

The lithium metal layer 400 may be or include a metal thin layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be applicable. The lithium metal layer 400 may include lithium or one of the alloys mentioned above. Alternatively, the lithium metal layer 400 may include various kinds of alloy.

The lithium metal layer 400 may have a fifth width WI5 in the first direction D1. The fifth width WI5 may be the same as or greater than the first width WI1. The fifth width WI5 may be the same as or less than the second width WI2. For example, the fifth width WI5 may be greater than the first width WI1 and less than the second width WI2.

Coating Layer

The coating layer 220 according to some examples and comparative examples of the present disclosure described below may be in a state that has undergone at least one charge/discharge cycle after cell fabrication. For example, FIGS. 4 to 6 show post-mortem evaluation results of the coating layer 220 in a cell that has undergone at least one charge/discharge cycle. For example, FIGS. 4 to 6 depict the coating layer 220 in a cell that has undergone a formation process. FIGS. 4 to 6 demonstrate post-use analysis results of the coating layer 220 in a cell that has undergone 10 charge/discharge cycles after a formation process.

FIG. 4 illustrates a cross-sectional view showing section "M" of FIG. 2A. FIG. 4 is an enlarged cross-sectional view of the coating layer 220 according to an example embodiment of the present disclosure. Referring to FIG. 4, the coating layer 220 may include a carbon-based material CCM and a metal particle MTP. In an example embodiment, the carbon-based material CCM may have a particle shape. An average particle diameter ($D_{50}$) of the carbon-based material CCM may range from $\geq$ 10 nm to $\leq$ 1 $\mu$m. For example, the average particle diameter ($D_{50}$) of the carbon-based material CCM may be equal to or greater than 10 nm, 20 nm, or 30 nm. For example, the average particle diameter ($D_{50}$) of the carbon-based material CCM may be equal to or less than 1 $\mu$m, 100 nm, 70 nm, or 50 nm.

When the average particle diameter ($D_{50}$) of the carbon-based material CCM falls within the range above, an all-solid-battery may have an increased lifetime and a minimum change in volume during charge and discharge.

In an example embodiment, the carbon-based material CCM may have a porous structure. For example, the carbon-based material CCM may have a Brunauer-Emmett-Teller (BET) specific surface area in a range of $\geq$ 5 m$^2$/g to $\leq$ 1,000 m$^2$/g or about 30 m$^2$/g to $\leq$ 100 m$^2$/g. The carbon-based material CCM may have a BET specific surface area of equal to or greater than 5 m$^2$/g, 10 m$^2$/g, 20 m$^2$/g, 30 m2/g, 40 m$^2$/g, 50 m$^2$/g, 60 m$^2$/g, 100 m$^2$/g, 200 m$^2$/g, 300 m$^2$/g, or 400 m$^2$/g. The carbon-based material CCM may have a BET specific surface area of equal to or less than 1,000 m$^2$/g, 10 m$^2$/g, 900 m$^2$/g, 800 m$^2$/g, 700 m$^2$/g, 600 m$^2$/g, 500 m$^2$/g, 400 m$^2$/g, 300 m$^2$/g, 200 m$^2$/g, 100 m$^2$/g, 90 m$^2$/g, 80 m$^2$/g, or 70 m$^2$/g.

When the BET specific surface area of the carbon-based material CCM falls within the range above, an all-solid-state battery may have an increased lifetime and a minimum change in volume during charge and discharge.

EP 4 734 162 A1

The carbon-based material CCM may include at least one of non-graphitizable carbon (or hard carbon) and graphitizable carbon (or soft carbon). For example, the carbon-based material CCM may include non-graphitizable carbon (or hard carbon).

For example, the carbon-based material CCM may include at least one of carbon black, carbon nano-tube, acetylene black, furnace black, ketjen black, and graphene. The carbon-based material CCM, however, is not limited to the examples described above.

The carbon-based material CCM may have at least one of a spherical shape, an oval shape, a plate shape, and a combination thereof. The shape of the carbon-based material CCM, however, is not limited to the examples described above.

The coating layer 220 may include a plurality of pores POR. For example, the coating layer 220 may have a porosity that is equal to or greater than 10%. The coating layer 220 may have a porosity that is equal to or less than 60% or 40%. The coating layer 220 may have a porosity in a range of $\geq 20\%$ to $\leq 40\%$. The porosity of the coating layer 220 may be obtained through Equation 1.

Equation 1:

$$\text{Porosity } (\%) = \{1 - (\text{apparent density} / \text{true density})\} \times 100.$$

A porosity may refer to a ratio of a pore volume to a total volume of a sample. The presence and size of pores in the sample may be indirectly evaluated from the porosity.

The apparent density may refer to a density that includes a total volume (apparent volume) of the sample, and may be calculated in consideration of empty spaces, such as open pores, within a sample. The apparent density may be a concept that contrasts with the true density. The apparent density may be defined to indicate a ratio of a mass of the coating layer 220 to a total volume (apparent volume) of the coating layer 220.

The apparent density may be measured using Archimedes' Principle, Mercury Porosimetry, or Liquid Pycnometry. For example, Archimedes' Principle may be a method in which buoyancy exerted to a sample in a liquid is measured to calculate a volume. For example, Mercury Porosimetry may be a method in which mercury is used to investigate a pore structure within a sample and a total volume of a sample is calculated based on the result. For example, Liquid Pycnometry may be used to directly measure a volume of a sample and the apparent density may be calculated. A method of measuring the apparent density, however, is not limited to the examples discussed above.

The true density may refer to a density of a pure material excluding all pores within a sample. The true density may be defined to indicate a theoretical density of the coating layer 220 that does not contain any pores. For example, the true density may be measured by a gas pycnometer. A value of the true density may be obtained by adsorbing a gas, such as helium, onto a sample, and measuring a pressure change due to a volume reduction of the adsorbed gas.

A method of measuring the true density using a gas pycnometer may be as follows. A sample chamber into which a sample is introduced may be connected through an expansion valve to a reference chamber. A volume (Vc) of the sample chamber may be measured, and a volume (Vr) of the reference chamber may be measured. When a gas inlet value is opened to introduce a helium gas into the sample chamber, an equilibrium pressure inside the sample chamber may become P1, and a volume may become Vc-Vs. Vs may be a volume of the sample. When the expansion valve is opened, a new equilibrium pressure may become P2, and the volume may become Vc-Vs+Vr. This may be written as a simple equation: P1(Vc-Vs)=P2(Vc-Vs+Vr). The equilibrium pressures P1 and P2 may be measured by a pressure transducer, and since the volumes of Vc and Vr of the two chambers are already known, Vs may be derived. The true density may be calculated by diving Vs into a pre-measured mass of the sample.

When the porosity of the coating layer 220 falls within the range above, an all-solid-state battery may have an increased lifetime and a minimum change in volume during charge and discharge.

According to an example embodiment of the present disclosure, the coating layer 220 may have an average pore size PRS that is relatively small. The average pore size PRS may refer to an average size of the pores POR present inside the coating layer 220, and may indicate an average length of major axes and minor axes measured from 100 randomly or non-systematically selected pores POR in the coating layer 220 depicted in FIG. 4. FIG. 4 may schematically represent an electron microscope image. The average size may be calculated using either a geometric mean or an arithmetic mean.

For example, a scanning electron microscope (SEM) image may be obtained from a cross-section of the coating layer 220, software such as Image J may be used to analyze an area of the pore POR from the SEM image, and then a diameter of a circle having the same area as the pore POR may be determined as a size of the pore POR.

Alternatively, a size of the pore POR may be calculated using a Barrett-Joyner-Halenda (BJH) method based on data obtained from Brunauer-Emmett-Teller (BET) analysis of the coating layer 220

The average pore size PRS according to an example embodiment of the present disclosure may range from $\geq 5$ nm to $\leq 200$ nm, from $\geq 10$ nm to $\leq 100$ nm, or from $\geq 10$ nm to $\leq 60$ nm. In an example embodiment, in the coating layer 220, a metal particle MTP which is discussed below may diffuse toward the negative electrode current collector 210 during charge and discharge of the battery. In this case, when the metal particle MTP diffuses and irreversibly remain on the negative electrode current collector 210, the pore POR may be formed on a space where the metal particle MTP is originally positioned. For example, the average pore size PRS may be proportional to an average metal particle size PTS which is discussed below.

According to an example embodiment of the present disclosure, the pores POR in the coating layer 220 may have a relatively narrow distribution. The distribution of the pores POR according to examples of the present disclosure may refer to uniformity of size distribution of the pores POR. The distribution of the pores POR may be defined through a standard deviation of pore sizes.

As discussed above, the standard deviation may be calculated from sizes of 100 randomly or non-systematically selected pores POR in an electron microscope image. The standard deviation of pore sizes may be defined to refer to a square root of the sum of squared differences between each pore size and the average pore size PRS, divided by a total number of pores (for example, N=100).

For example, the standard deviation of pore sizes according to the present disclosure may be statistically calculated based on measurement data obtained from pore sizes measured through a scanning electron microscope (SEM).

The distribution, or the standard deviation, of the pores POR according to an example embodiment of the present disclosure may be equal to or less than 60%, 50%, or 40% of the average pore size PRS. For example, when the average pore size PRS is about 20 nm, the standard deviation may be equal to or less than 10 nm. For example, when the average pore size PRS is about 40 nm, the standard deviation may be equal to or less than 20 nm.

The pores POR in the coating layer 220 may constitute resistors to conduction and/or diffusion of lithium. A reduction in the average pore size PRS of the pores POR may lead to an improvement in lifetime and performance of the all-solid-state battery. For example, when the average pore size PRS according to the present disclosure falls within the range above, the all-solid-state battery may improve in lifetime and performance. A reduction in distribution of the pores POR may lead to an improvement in lifetime and performance of the all-solid-state battery. For example, when the standard deviation of pore sizes according to the present disclosure falls within the range above, the all-solid-state battery may improve in lifetime and performance.

The coating layer 220 may include a plurality of metal particles MTP. The metal particles MTP may help facilitate migration of lithium ions toward the negative electrode current collector 210 when the all-solid-state battery is charged and discharged.

The metal particle MTP may include at least one of gold (Au), platinum (Pt), palladium (Pd), silicon (Si), silver (Ag), aluminum (Al), bismuth (Bi), tin (Sn), zinc (Zn), magnesium (Mg), titanium (Ti), gallium (Ga), zinc oxide (ZnO), germanium (Ge), lead (Pb), antimony (Sb), and indium (In). For example, the metal particle MTP may include at least one of silver (Ag), magnesium (Mg), bismuth (Bi), gold (Au), platinum (Pt), zinc (Zn), and a combination thereof.

The metal particle MTP according to an example embodiment of the present disclosure may include a lithiophilic metal. The lithiophilic metal may exhibit characteristics represented by Equation 2.

Equation 2:

$$\Delta G = \Delta H_{523.15K} - T\Delta S_{523.15K} \leq 0.$$

For example, at about 250°C, the lithiophilic metal may have a Gibbs free energy $\Delta G$ of equal to or less than 0 kJ/mol in a chemical reaction with molten lithium. For example, at about 250°C, the Gibbs free energy $\Delta G$ of the chemical reaction between the metal particle MTP and the molten lithium may range from $\geq$ -1,500 kJ/mol to $\leq$ 0 kJ/mol. The lithiophilic metal and lithium may spontaneously form an alloy under the above condition.

The metal particle MTP according to an example embodiment of the present disclosure may be or include a nano-particle. The metal particle MTP may include at least one of a single particle LPM and an aggregate AGR. For example, a plurality of single particles LPM may be aggregated to constitute one particle form, which aggregated particle may be defined as the aggregate AGR.

The aggregate AGR according to the present example embodiment may have a form in which about 10 or less single particles LPM are aggregated. For example, the aggregate AGR according to the present example embodiment may be nano-scaled similarly to the single particle LPM.

The metal particle MTP may have an average particle diameter PTS in a range of $\geq 5$ nm to $\leq 300$ nm. For example, the metal particle MTP may have an average particle diameter PTS that is equal to or greater than 5 nm or 10 nm.

For example, the metal particle MTP may have an average particle diameter PTS that is equal to or less than 300 nm, 200 nm, or 100 nm. When the average particle diameter PTS of the metal particle MTP falls within the range above, lithium ions may readily migrate toward the negative electrode current collector 210 when the all-solid-state battery is charged and discharged. When the average particle diameter PTS of the metal particle MTP falls within the range above, the average pore size PRS and the distribution of the pores POR in the coating layer 220 may each have a relatively small value discussed above.

According to an example embodiment of the present disclosure, the average particle diameter PTS of the metal particle MTP may be relatively small. The average particle diameter PTS of the metal particle MTP may refer to an average size of the metal particles MTP, or the single particles LPM and the aggregates AGR, present in the coating layer 220. The average particle diameter PTS may indicate an average length of major axes and minor axes measured from 100 randomly or non-systematically selected metal particles MTP in the coating layer 220 depicted in FIG. 4. The average particle diameter may be calculated using either a geometric mean or an arithmetic mean.

According to an example embodiment of the present disclosure, the metal particles MTP in the coating layer 220 may have a relatively narrow distribution. The distribution of the metal particles MTP according to examples of the present disclosure may refer to uniformity of size distribution of the metal particles MTP. The distribution of the metal particles MTP may be defined through a standard deviation of particle diameters of the metal particles MTP.

As discussed above, the standard deviation may be calculated from sizes of 100 randomly or non-systematically selected metal particles MTP in an electron microscope image. The standard deviation of particle diameters may be defined to refer to a square root of the sum of squared differences between the particle diameter of each metal particle MTP and the average particle diameter PTS, divided by a total number of particles (for example, N=100).

For example, the standard deviation of particle diameters of the metal particles MTP according to examples of the present disclosure may be statistically calculated based on measurement data obtained from particle diameters measured through a scanning electron microscope (SEM).

The distribution, or standard deviation, of the metal particles MTP according to an example embodiment of the present disclosure may be equal to or less than 60%, 50%, or 40% of the average particle diameter PTS. For example, when the average particle diameter PTS is about 20 nm, the standard deviation may be equal to or less than 10 nm. For example, when the average particle diameter PTS is about 40 nm, the standard deviation may be equal to or less than 20 nm.

As discussed above, the size of the metal particle MTP may determine the size of the pore POR formed after a charge/discharge cycle. For example, a reduction in the average particle diameter PTS and the distribution of the metal particle MTP may lead to a reduction in the porosity, the average pore size PRS, and the pore distribution of the coating layer 220.

According to an example embodiment of the present disclosure, when the coating layer 220 is analyzed by post-mortem evaluation, it may be somewhat difficult to measure a particle diameter of the metal particle MTP from a SEM image. This may be because that the size of the metal particle MTP is substantially fine. The size of the pore POR may be readily measured by using software such as Image J to analyze the area of the pore POR. Therefore, the size and the distribution of the pores POR may be analyzed to identify the size and the distribution of corresponding metal particles MTP.

According to an example embodiment of the present disclosure, as the metal particles MTP in the coating layer 220 may have their relatively small average particle diameter PTS and distribution, the coating layer 220 may have a reduced porosity, average pore size PRS, and pore distribution. Therefore, the all-solid-state battery according to the present disclosure may improve in lifetime and performance.

The metal particle MTP in the coating layer 220 may be present in an amount in a range of $\geq$ 1 wt% to $\leq$ 50 wt% relative to the total weight of the coating layer 220. For example, the metal particle MTP may be present in an amount that is equal to or greater than 3 wt%, 5 wt%, or 10 wt% relative to the total weight of the coating layer 220. For example, the metal particle MTP may be present in an amount that is equal to or less than 50 wt%, 40 wt%, 30 wt%, 25 wt%, 20 wt%, or 15 wt% relative to the total weight of the coating layer 220. When the amount of the metal particle MTP falls within the range above, lithium ions may readily migrate toward the negative electrode current collector 210 when the all-solid-state battery is charged and discharged.

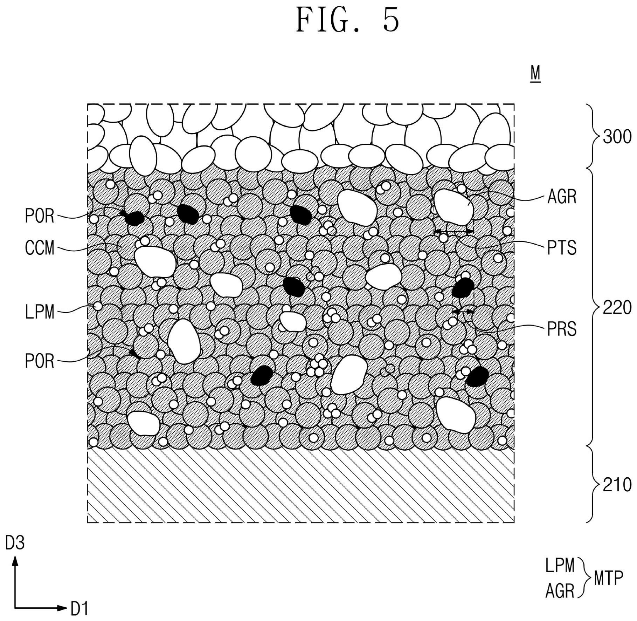

FIG. 5 illustrates an enlarged cross-sectional view of section "M" depicted in FIG. 2A, showing a coating layer according to a comparative example of the present disclosure. In the example embodiments that follow, the same features as those discussed above with reference to FIG. 4 are omitted for convenience of description, and a difference thereof is discussed in detail.

Referring to FIG. 5, the metal particle MTP in the coating layer 220 may have a relatively large average particle diameter PTS. The metal particle MTP shown in FIG. 5 may have an average particle diameter PTS in a range of $\geq$ 200 nm to $\leq$ 1,000 nm. An aggregate AGR of FIG. 5 may be greater than the aggregate AGR of FIG. 4. The massive aggregate AGR may have a size greater than 1 $\mu$m.

The metal particles MTP in the coating layer 220 of FIG. 5 may have a relatively wide distribution. For example, the metal particles MTP of FIG. 5 may have irregular sizes. The metal particles MTP of FIG. 5 may have particle diameters with a standard deviation that is relatively large. For example, the standard deviation of the particle diameters of the metal particles MTP shown in FIG. 5 may be equal to or greater than 80% or 100% of an average particle diameter PTS. For example, when the average particle diameter PTS is about 500 nm, the standard deviation may be equal to or less than 400 nm.

The coating layer 220 of FIG. 5 may contain pores POR having relatively large sizes. An average pore size PRS of FIG. 5 may range from ≥ 200 nm to ≤ 1,000 nm. The massive pore POR may be formed by migration of the massive aggregate AGR.

The pores POR in the coating layer 220 of FIG. 5 may have a relatively wide distribution. For example, the pores POR of FIG. 5 may have irregular sizes. The pore size of FIG. 5 may have a relatively large standard deviation. For example, the distribution, or standard deviation, of the pores POR shown in FIG. 5 may be equal to or greater than 80% or 100% of an average pore size.

The coating layer 220 according to a comparative example may have a relatively large metal particle MTP, a relatively large pore POR, and a relatively wide distribution of the pore POR. This may constitute a large resistor to conduction and/or diffusion of lithium in the coating layer 220. Accordingly, the coating layer 220 according to a comparative example may deteriorate battery performance and lifetime.

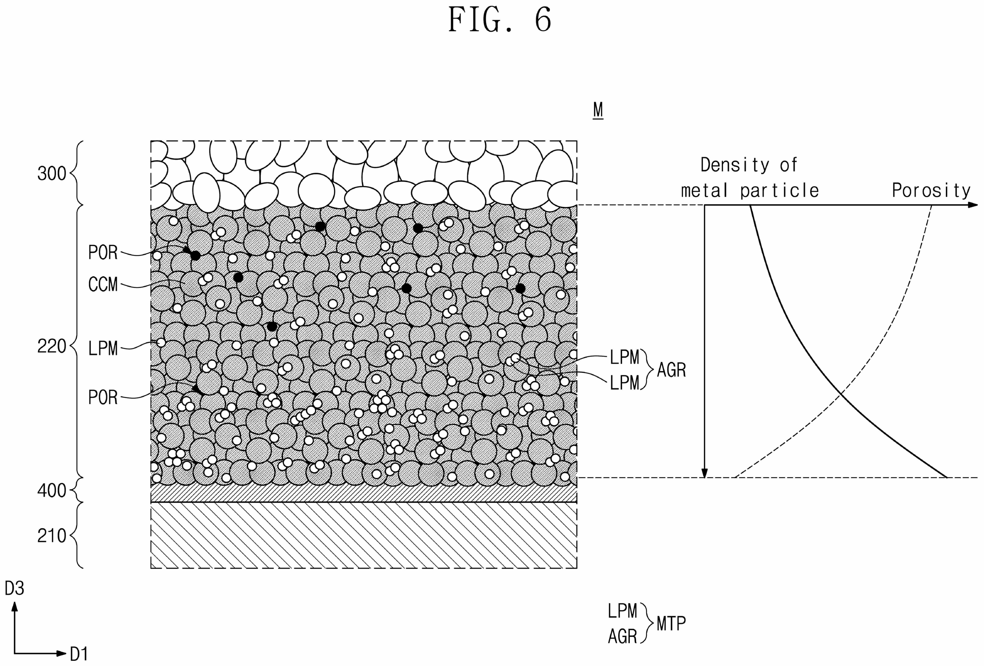

FIG. 6 illustrates an enlarged cross-sectional view of section "M" depicted in FIG. 2A, showing a coating layer according to an example embodiment of the present disclosure. In the example embodiments that follow, the same features as those discussed above with reference to FIG. 4 are omitted for convenience of description, and a difference thereof is discussed in detail.

Referring to FIG. 6, a lithium metal layer 400 may be provided between the coating layer 220 and the negative electrode current collector 210. A detailed description of the lithium metal layer 400 may be substantially the same as the description provided above with reference to FIG. 4. For example, FIG. 6 may show the coating layer 220 that has undergone at least one charge/discharge cycle of the all-solid-state battery.

According to an example embodiment of the present disclosure, the metal particles MTP distributed in the coating layer 220 may exhibit a tendency for their density to gradually decrease in a direction from lower to upper portions of the coating layer 220. For example, the metal particles MTP in the coating layer 220 adjacent to the negative electrode current collector 210 or the lithium metal layer 400 may have a density that is greater than the density of the metal particles MTP in the coating layer 220 adjacent to the solid electrolyte layer 300.

In the present disclosure, the density of the metal particles MTP may refer to the number of the metal particles MTP present in a given area, and may be analyzed based on an electron microscope image.

For example, based on a specific thickness of the coating layer 220, the number of the metal particles MTP per unit area in each layer (lower, middle, and upper portions) may be measured to identify in detail a variation in density of the metal particles MTP.

An electron microscope image may be used to obtain the density of the particles MTP per unit area for each of top, middle, and bottom of the coating layer 220, and based on this data, a variation in density may be visualized as a graph (see FIG. 6). The tendency of the density of the metal particles MTP to decrease in a direction from lower to upper portions of the coating layer 220 may influence physical properties and electrical conductivity of the coating layer 220.

A distribution of the density of the metal particles MTP according to an example embodiment of the present disclosure may be adjusted such that the metal particles MTP may produce diffusion, conduction, and alloy of lithium in the coating layer 220 as desired. For example, a higher density of the metal particles MTP may be formed in a lower portion of the coating layer 220 where diffusion, conduction, and alloy of lithium may occur more significantly, and a lower density of the metal particles MTP may be formed in an upper portion of the coating layer 220 where diffusion, conduction, and alloy of lithium may occur less significantly. Accordingly, it may be possible to improve or optimize electrical performance of the all-solid-state battery.

According to an example embodiment of the present disclosure, the pores POR distributed in the coating layer 220 may exhibit a tendency for their density to gradually increase in a direction from lower to upper portions of the coating layer 220. For example, a porosity may gradually increase in a direction from lower to upper portions of the coating layer 220. The porosity may be substantially the same as the porosity defined above. A variation in porosity may also be plotted as a graph of FIG. 6. The porosity may be inversely proportional to the density of the metal particles MTP. According to an example embodiment of the present disclosure, the porosity may be changed as shown in a graph of FIG. 6 to improve or optimize electrical performance of the all-solid-state battery.

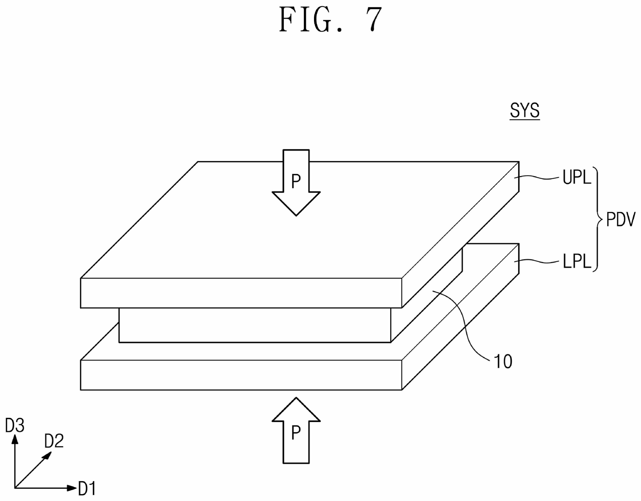

FIG. 7 illustrates a perspective view showing an all-solid-state battery system according to an example embodiment of the present disclosure. Referring to FIG. 7, an all-solid-state battery system SYS may include an all-solid-state battery 10 and a pressing device PDV. The all-solid-state battery 10 may include at least one unit cell CEL according to an example embodiment of the present disclosure.

The pressing device PDV may be configured to externally apply pressure to uniformly press the all-solid-state battery 10 disposed therein. The pressing device PDV may uniformly electro-deposit and desorb lithium during charge and discharge, and may hinder or prevent the all-solid-state battery 10 from structural degradation.

A pressing method may be any suitable way capable of applying pressure, e.g., substantially uniform pressure, to the all-solid-state battery 10, and is not limited to the example mentioned above. For example, the pressing device PDV may be a pressing jig. The pressing device PDV may include an upper plate UPL and a lower plate LPL, and may also include a fastening mechanism for interconnecting and fixing the two plates UPL and LPL. For example, the fastening mechanism (not shown) may include a bolt and a nut that pass through each corner of the two plates UPL and LPL and fasten with each other. For example, the fastening mechanism may include four bolts and four nuts that are fastened to penetrate four corners of each of the two plates UPL and LPL.

A fastening pressure P of the pressing device PDV may be a pressure that reduces an interfacial resistance in the all-solid-state battery 10 and enables stable performance of the all-solid-state battery 10 during charge and discharge. The fastening pressure P may depend on configuration, size, and other factors of the all-solid-state battery 10. For example, the fastening pressure P may be equal to or less than 6.0 MPa, 5.5 MPa, 5.0 MPa, 4.5 MPa, 4.0 MPa, 2.5 MPa, 2.0 MPa, 1.5 MPa, or 1.0 MPa. For example, the fastening pressure P may be greater than 0 MPa, or may be equal to or greater than 0.001 MPa, 0.005 MPa, 0.01 MPa, 0.05 MPa, 0.1 MPa, or 0.5 MPa.

The all-solid-state battery 10 including the coating layer 220 according to an example embodiment of the present disclosure may stably operate even at a low fastening pressure P, and may have an increased lifetime.

Even during charge and discharge at not only a higher fastening pressure but also a lower fastening pressure, the coating layer 220 according to an example embodiment of the present disclosure may have a small variation in volume and may maintain a stable lifetime.

Preparation Method of Coating Slurry and Coating Layer

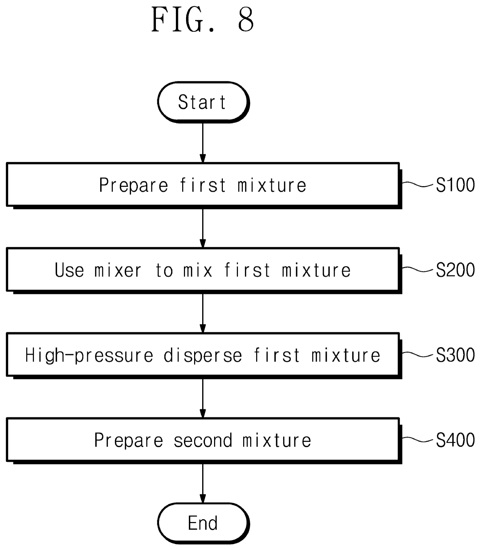

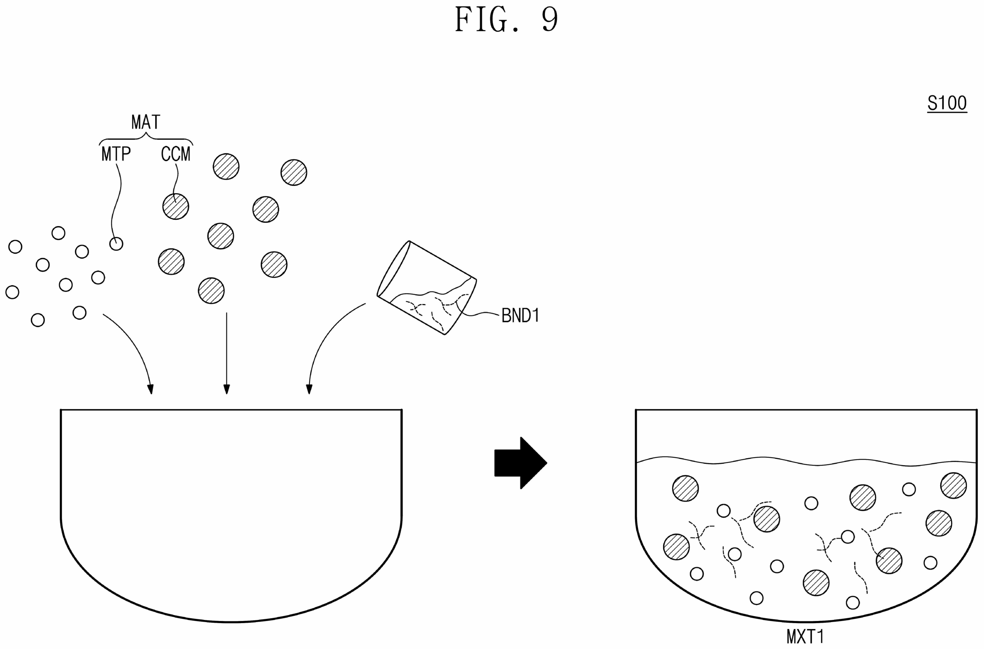

FIG. 8 illustrates a flow chart showing a method of preparing a coating slurry according to an example embodiment of the present disclosure. FIGS. 9, 10, and 11 illustrate diagrams showing steps of the preparation method shown in FIG. 8.

Referring to FIG. 8, a method of preparing a coating slurry according to an example embodiment of the present disclosure may include preparing a first mixture by mixing a coating material with a binder solution that includes a solvent and a first binder (S100), using a mixer to mix the first mixture (S200), allowing the first mixture to undergo a high-pressure dispersion treatment (S300), and preparing a second mixture by adding a second binder to the first mixture (S400).

Referring to FIGS. 8 and 9, a coating material MAT and a first binder BND1 may be added to a solvent to prepare a first mixture MXT1 (S100). The coating material MAT may include a carbon-based material CCM and a metal particle MTP discussed above.

The coating material MAT may further include an additive. For example, the coating material MAT may further include at least one of a filler, coating agent, a dispersant, and an ionic conductivity agent.

The first binder BND1 may increase viscosity of the first mixture MXT1, and thus the first mixture MXT1 may be prepared in the form of slurry. For example, the first binder BND1 may include at least one of an acrylate-based binder, a polyvinylidenefluoride-based binder, a polyvinylpyrrolidone-based binder, a polyvinylalcohol-based binder, and a cellulose-based binder.

The acrylate-based binder may be or include, for example, at least one of polyacrylic acid (PAA), polymethylmethacrylate, polyisobutylmethacrylate, polyethylacrylate, polybutyl acrylate, or poly(2-ethylhexyl acrylate).

The polyvinylidenefluoride-based binder may be or include, for example, at least one of polyvinylidenefluoride (PVDF), poly(vinylidenefluoride-co-hexafluoropropylene), poly(vinylidenefluoride-co-trichloroethylene), poly(vinylidenefluoride-co-tetrafluoroethylene), poly(vinylidenefluoride-co-trifluoroethylene), poly(vinylidenefluoride-co-trifluorochloroethylene), poly(vinylidenefluoride-co-ethylenefluoride-hexafluoropropylene), or polyvinylidenefluoride-co-trichloroethylene. The polyvinylpyrrolidone-based binder may be or include, for example, polyvinylpyrrolidone. The polyvinylalcohol-based binder may be or include, for example, polyvinylalcohol.

The cellulose-based binder may be or include, for example, at least one of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum. In an example embodiment, the first binder BND1 may include carboxymethylcellulose (CMC).

The first binder BND1 may have desired or improved dispensability to uniformly disperse components of the coating material MAT and to simultaneously or contemporaneously allow the first mixture MXT1 to have appropriate or desired viscosity.

The solvent may be an aqueous solvent or a non-aqueous solvent. In an example embodiment, the solvent may be or include water. In this description, the aqueous solvent may refer to solvents that contain water as their main component. For example, the aqueous solvent may include water. In addition, the aqueous solvent may further include at least one of methanol, ethanol, ethylene glycol, diethylene glycol, and glycerol.

In an example embodiment, the first binder BND1 and the solvent may be mixed to form a binder solution. The first binder BND1 may be present in an amount in a range of ≥ 0.5 wt% to ≤ 10 wt% in the binder solution. For example, the amount of the first binder BND1 in the binder solution may be in a range of ≥ 0.5 wt% to ≤ 5 wt%, about 0.8 wt% to ≤ 3.5 wt%, or about 0.8 wt% to ≤ 3 wt%, or may be about 1 wt%.

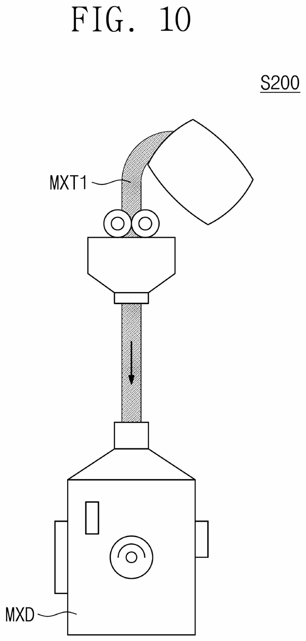

Referring to FIGS. 8 and 10, the first mixture MXT1 may be mixed by a mixer MXD (S200). In an example embodiment, a planetary mixer may be utilized to perform the mixing process at a temperature in a range of ≥ 20°C to ≤ 60°C for a duration in a range of ≥ 20 minutes to ≤ 250 minutes. During the mixing process, the binder solution may be added to allow the first binder BND1 to have an amount in a range of ≥ 1 wt% to ≤ 5 wt% in the first mixture MTX1.

When the amount of the first binder BND1 in the first mixture MTX1 is less than the range above, there may be a reduction in dispersion effect of the metal particles MTP in a dispersion process which is discussed below. When the amount of the first binder BND1 is greater than the range above, the first binder BND1 may be excessively adsorbed on a surface of the carbon-based material CCM and a surface of the metal particle MTP, and cause the hindrance of migration of lithium ions. Accordingly, the internal resistance of a battery may increase.

The mixing process may cause the first mixture MXT1 to have a viscosity in a range of ≥ 1,000 cps to ≤ 4,000 cps. For example, the viscosity of the first mixture MXT1 may range from ≥ 1,000 cps to ≤ 3,500 cps, from ≥ 1,500 cps to ≤ 3,000 cps, from ≥ 1,500 cps to ≤ 2,500 cps, or from ≥ 2,000 cps to ≤ 2,500 cps.

When the amount of the first binder BND1 in the first mixture MTX1 falls within the range above, and when the viscosity of the first mixture MTX1 satisfies the range above, there may be an increase in contact amount between the first binder BND1 and the coating material MAT.

A solid content in the first mixture MXT1 may be present in an amount in a range of ≥ 15 wt% to ≤ 45 wt%. The solid content in the first mixture MTX1 may include the coating material MAT and the first binder BND1. For example, the amount of the solid content in the first mixture MXT1 may range from ≥ 15 wt% to ≤ 40 wt%, from ≥ 15 wt% to ≤ 35 wt%, from ≥ 20 wt% to ≤ 35 wt%, or from ≥ 20 wt% to ≤ 30 wt%.

When the amount of the solid content in the first mixture MTX1 is deviated from the range above, a solvent may be added in the mixing process to adjust the amount of the solid content in the first mixture MXT1.

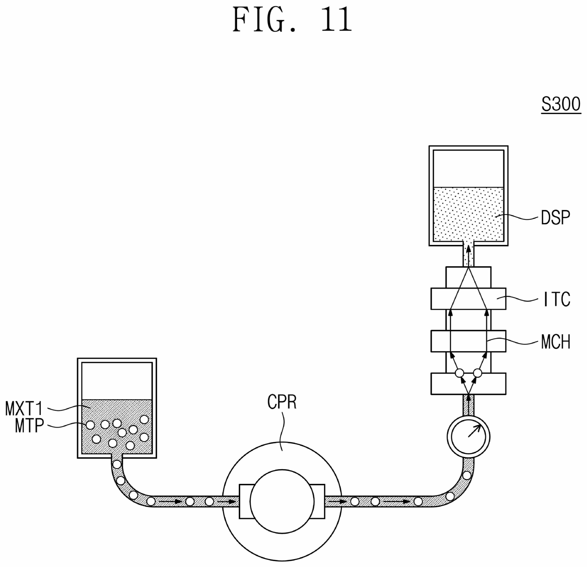

Referring to FIGS. 8 and 11, a high-pressure dispersion process may be performed on the first mixture MXT1 (S300). In the high-pressure dispersion step (S300), a high-pressure disperser may perform the high-pressure dispersion process on the first mixture MXT1. Therefore, a dispersion DSP may be obtained.

A metal particle MTP in the form of a massive aggregation may be present in the first mixture MXT1 that is mixed by the mixer MXD. The high-pressure disperser illustrated in FIG. 11 may divide the metal particle MTP in the form of a massive aggregate into fine nano-particles. The high-pressure disperser illustrated in FIG. 11 may uniformly, or substantially uniformly, disperse the nano-sized fine metal particles MTP in the dispersion DSP.

For example, a compressor CPR may pressurize the first mixture MXT1 at high pressures. The first mixture MXT1 may be pressurized at a pressure in a range of ≥ 2,000 psi to ≤ 30,000 psi.

The high pressurized first mixture MXT1 may be provided into an interaction chamber ITC. The interaction chamber ITC may include a micro-channel MCH. The high pressurized first mixture MXT1 may pass through the micro-channel MCH.

A strong shear force may be applied to the first mixture MXT1 that passes through the micro-channel MCH. Thus, the metal particle MTP in the form of a massive aggregate may be crushed into fine nano-particles. The first mixture MXT1 may be homogenized. The high-pressure disperser may form the dispersion DSP in which the metal particles MTP are uniformly dispersed in the form of nano-particles.

The high-pressure dispersion step (S300) may include performing the dispersion process repeatedly for a about 2 to 10 times. The dispersion process may be performed for a duration in a range of ≥ 2 hours to ≤ 5 hours at a time. When the number of dispersion steps of the first mixture MXT1 falls within the range above, the dispersion DSP may have improved dispensability of the metal particle MTP. As the high-pressure dispersion step (S300) is repeatedly performed, the metal particle MTP may have a reduced average particle diameter and a narrow size distribution.

In an example embodiment of the present disclosure, the number of repetitions discussed above may be adjusted depending on pressure applied to the first mixture MXT1 by the compressor CPR. For example, when the first mixture MXT1 is pressurized at a relatively high pressure such as 20,000 psi, the dispersion process may be performed twice. For example, when the first mixture MXT1 is pressurized at a relatively low pressure such as 5,000 psi, the dispersion process may be performed 10 times.

The high-pressure disperser is not limited to the equipment shown in FIG. 11, and there may be no limitation on any suitable equipment capable of performing the high-pressure dispersion process on the first mixture MXT1. For example, the high-pressure disperser may include at least any one of Microfludizer (MFD), Jet Mill, Starburst, Nanomizer, G-smasher, Nano Jet Pearl, and Micronox.

Referring to FIG. 8, a second binder may be mixed into the dispersion DSP to obtain a second mixture (S400). For example, the prepared second mixture may be in the form of slurry, and may be or include a coating slurry for an all-solid-state battery according to an example embodiment of the present disclosure.

The second binder may have desired or improved adhesion. For example, the second binder may include at least one of a rubber-based binder, an imide-based binder, a nitrile-based binder, an acetate-based binder, and a cyano-based binder.

The imide-based binder may be or include, for example, polyimide or polyamide imide.

The nitrile-based binder may be or include, for example, polyacrylonitrile or acrylonitrile-styrene-butadiene copolymer.

The acetate-based binder may be or include, for example, at least one of polyvinyl acetate, polyethylene-co-vinyl acetate, cellulose acetate, cellulose acetate butyrate, or cellulose acetate propionate.

The cyano-based binder may be or include, for example, cyanoethyl sucrose.

In an example embodiment, the second binder may be or include a rubber-based binder. The second binder may be different from the first binder BND1. In an example embodiment, the second binder may be or include styrene-butadiene rubber (SBR). In another example embodiment, the second binder may be or include nitrile-butadiene rubber (NBR).

The second binder may be provided in a solution state dissolved in a solvent. For example, the solvent may be an aqueous solvent or a non-aqueous solvent. In an example embodiment, the solvent may be or include water.

The second binder may be mixed into the dispersion DSP. There may be no limitation on the mixing method. In an example embodiment, the second binder may be added to the dispersion DSP, and then a planetary mixer may be utilized to agitate the mixture at about 20°C to ≤ 60°C for about 20 minutes to ≤ 250 minutes.

The second binder may be added to have an amount in a range of ≥ 0.5 wt% to ≤ 5 wt% in the second mixture. For example, the amount of the second binder in the second mixture may range from ≥ 1 wt% to ≤ 4 wt% or from ≥ 1.5 wt% to ≤ 3 wt%.

When the amount of the second binder in the second mixture falls within the range above, the second mixture (or coating slurry) may have appropriate or desired adhesive properties and viscosity to increase coating adhesion and dispersion stability.

A total amount of the first and second binders in the second mixture may range from ≥ 1 wt% to ≤ 10 wt%. When the amount of the first and second binders in the second mixture falls within the range above, the coating material MAT may not be sufficiently dispersed. When the amount of the first and second binders in the second mixture is greater than the range above, the first and second binders may be excessively adsorbed on a surface of the carbon-based material CCM and/or a surface of the metal particle MTP to hinder migration of lithium ions and to increase a battery internal resistance.

A solid content in the second mixture may include the coating material MAT, the first binder BND1, and the second binder. For example, the solid content in the second mixture may be present in an amount in a range of ≥ 15 wt% to ≤ 50 wt%, about 15 wt% to ≤ 45 wt%, about 20 wt% to ≤ 45 wt%, or about 20 wt% to ≤ 30 wt%. For example, the second binder may be added in the aforementioned amount to allow the amount of the solid content in the second mixture to fall within the range above.

When the amount of the solid content in the second mixture deviates from the range above, a solvent may be added to adjust the amount of the solid content in the second mixture. The solvent may be the same as the solvent discussed above. In an example embodiment, the solvent may be an aqueous solvent. For example, the solvent may include water.

In an example embodiment of the present disclosure, compared to other slurry having the same amount of solid content, the second mixture (or coating slurry) may have a relatively low viscosity. For example, according to measurement results of shear viscosity of the coating slurry for an all-solid-state battery in accordance with the present disclosure, under the condition of about 20°C and a shear rate of 10 (1/s), the coating slurry may have a viscosity ranging from ≥ 200 mPa·s to ≤ 1,000 mPa·s, for example, from ≥ 300 mPa·s to ≤ 700 mPa·s.

Compared to other slurry having the same amount of solid content, the second mixture (or coating slurry) may have relatively desired or improved dispensability. For example, according to measurement results of shear viscosity of the coating slurry for an all-solid-state battery in accordance with the present disclosure, a thixotropic index (TI) or a ratio of viscosity at a shear rate of 1 (1/s) and a shear rate of 10 (1/s) under a temperature of 20°C may be equal to or greater than 0.2. In detail, the TI may range from ≥ 0.4 to ≤ 0.9.

Afterwards, the second mixture (or coating slurry) may be coated on a negative electrode current collector 210, and dried to form a coating layer 220 according to the present disclosure.

As discussed above, the high-pressure dispersion process may transform the metal particle MTP into the fine single particle LPM shown in FIG. 4. In the coating layer 220 according to the present disclosure, the average particle diameter PTS of the metal particle MTP may have a fine size that is equal to or less than 100 nm. In the coating layer 220 according to the present disclosure, the metal particle MTP may have a size distribution that is relatively narrow (or, standard deviation of equal to or less than 5.0 nm or 3.0 nm). Accordingly, an all-solid-state battery including the coating layer 220 according to the present disclosure may improve in lifetime and performance.

The present disclosure is discussed below in detail through embodiments. These example embodiments, however, are provided to illustrate the present disclosure, and the scope of the present disclosure is not limited to these embodiments.

Embodiment 1

1) Silver (Ag) and carbon black were mixed to prepare a coating material. Silver and carbon black were mixed in a weight ratio of 25:75 to constitute a composition of the coating material.

2) An aqueous solution of carboxymethyl cellulose (CMC) containing 1 wt% of solid content was added to the coating material, and then mixed at a temperature of 25°C for 120 minutes to prepare a first mixture in the form of slurry. For example, the mixing was carried out by agitating the coating material and the aqueous CMC solution in a weight ratio of 43:57.

Afterwards, in order to adjust viscosity, water was additionally added to eventually prepare the first mixture with a solid content of 23 wt% and a viscosity of 1,865 cps.

3) A microfludizer (MFD) was used to perform a high-pressure dispersion process on the first mixture. For example, the first mixture was pressurized at a pressure of 5,000 psi to perform the high-pressure dispersion process 10 times. Thus, a dispersion was obtained.

4) After the termination of the high-pressure dispersion process, the dispersion was added with an aqueous dispersion solution to which styrene-butadiene rubber (SBR) was added, and then mixed at a temperature of 25°C for 60 minutes to prepare a second mixture as a coating slurry. For example, the mixing was carried out by agitating the dispersion and the aqueous dispersion solution in a weight ratio of 97:3. As a result, the coating slurry was prepared with a solid content amount of 25 wt%.

5) A doctor blade was used to coat the coating slurry of 20 $\mu$m to 30 $\mu$m on a surface of a stainless steel (SUS) current collector, and then a coating layer was dried in an oven at 80°C. After the coating layer was dried, a hot roll press at 60°C was used to press the coating layer to have a thickness of 10 $\mu$m to 15 $\mu$m. A porosity of the coating layer was about 30%. The porosity was obtained through Equation 1 discussed above.

Embodiment 2

In the high-pressure dispersion process of Embodiment 1, the first mixture was pressurized at a pressure of 5,000 psi to perform the high-pressure dispersion process 7 times. Except for the difference described above, a coating layer was prepared in the same method as in Embodiment 1.

Embodiment 3

In the high-pressure dispersion process of Embodiment 1, the first mixture was pressurized at a pressure of 7,000 psi to perform the high-pressure dispersion process 7 times. Except for the difference described above, a coating layer was prepared in the same method as in Embodiment 1.

Embodiment 4

In the high-pressure dispersion process of Embodiment 1, the first mixture was pressurized at a pressure of 5,000 psi to perform the high-pressure dispersion process 5 times. Except for the difference described above, a coating layer was prepared in the same method as in Embodiment 1.

Embodiment 5

In the high-pressure dispersion process of Embodiment 1, the first mixture was pressurized at a pressure of 7,000 psi to perform the high-pressure dispersion process 5 times. Except for the difference described above, a coating layer was prepared in the same method as in Embodiment 1.

Embodiment 6

In the high-pressure dispersion process of Embodiment 1, the first mixture was pressurized at a pressure of 10,000 psi to perform the high-pressure dispersion process 5 times. Except for the difference described above, a coating layer was prepared in the same method as in Embodiment 1.

Embodiment 7

In the high-pressure dispersion process of Embodiment 1, the first mixture was pressurized at a pressure of 15,000 psi to perform the high-pressure dispersion process 5 times. Except for the difference described above, a coating layer was prepared in the same method as in Embodiment 1.

Embodiment 8

In the high-pressure dispersion process of Embodiment 1, the first mixture was pressurized at a pressure of 7,000 psi to perform the high-pressure dispersion process 3 times. Except for the difference described above, a coating layer was prepared in the same method as in Embodiment 1.

Embodiment 9

In the high-pressure dispersion process of Embodiment 1, the first mixture was pressurized at a pressure of 10,000 psi to perform the high-pressure dispersion process 3 times. Except for the difference described above, a coating layer was prepared in the same method as in Embodiment 1.

Embodiment 10

In the high-pressure dispersion process of Embodiment 1, the first mixture was pressurized at a pressure of 15,000 psi to perform the high-pressure dispersion process 3 times. Except for the difference described above, a coating layer was prepared in the same method as in Embodiment 1.

Embodiment 11

In the high-pressure dispersion process of Embodiment 1, the first mixture was pressurized at a pressure of 20,000 psi to perform the high-pressure dispersion process twice. Except for the difference described above, a coating layer was prepared in the same method as in Embodiment 1.

Comparative 1

A coating layer was prepared in the same method as in Embodiment 1, with a difference that the high-pressure dispersion process was omitted in Embodiment 1.

Comparative 2

A coating layer was prepared in the same method as in Embodiment 1, with a difference that, in the high-pressure dispersion process of Embodiment 1, the first mixture was pressurized at a pressure of 5,000 psi to perform the high-pressure dispersion process only once.

Comparative 3

A coating layer was prepared in the same method as in Embodiment 1, with a difference that, in the high-pressure dispersion process of Embodiment 1, the first mixture was pressurized at a pressure of 7,000 psi to perform the high-pressure dispersion process only once.

Comparative 4

A coating layer was prepared in the same method as in Embodiment 1, with a difference that, in the high-pressure dispersion process of Embodiment 1, the first mixture was pressurized at a pressure of 10,000 psi to perform the high-pressure dispersion process only once.

Comparative 5

A coating layer was prepared in the same method as in Embodiment 1, with a difference that, in the high-pressure dispersion process of Embodiment 1, the first mixture was pressurized at a pressure of 15,000 psi to perform the high-pressure dispersion process only once.

Comparative 6

A coating layer was prepared in the same method as in Embodiment 1, with a difference that, in the high-pressure dispersion process of Embodiment 1, the first mixture was pressurized at a pressure of 20,000 psi to perform the high-pressure dispersion process only once.

Comparative 7

A coating layer was prepared in the same method as in Embodiment 1, with a difference that, in the high-pressure dispersion process of Embodiment 1, the first mixture was pressurized at a pressure of 5,000 psi to perform the high-pressure dispersion process twice.

Table 1below lists the high-pressure dispersion processes of Embodiments 1 to 11 and Comparatives 1 to 7.

Table 1:

|  | High-pressure dispersion | Pressure (psi) | Repetition number |
|---|---|---|---|
| Embodiment 1 | O | 5,000 | 10 |
| Embodiment 2 | O | 5,000 | 7 |
| Embodiment 3 | O | 7,000 | 7 |
| Embodiment 4 | O | 5,000 | 5 |
| Embodiment 5 | O | 7,000 | 5 |
| Embodiment 6 | O | 10,000 | 5 |
| Embodiment 7 | O | 15,000 | 5 |
| Embodiment 8 | O | 7,000 | 3 |
| Embodiment 9 | O | 10,000 | 3 |
| Embodiment 10 | O | 15,000 | 3 |
| Embodiment 11 | O | 20,000 | 2 |
| Comparative 1 | X | - | - |
| Comparative 2 | O | 5,000 | 1 |
| Comparative 3 | O | 7,000 | 1 |
| Comparative 4 | O | 10,000 | 1 |
| Comparative 5 | O | 15,000 | 1 |
| Comparative 6 | O | 20,000 | 1 |
| Comparative 7 | O | 5,000 | 3 |

Manufacture of Positive Electrode Layer

A powder of $LiNi_{0.8}Co_{0.15}Mn_{0.05}O_2$ (NCM) was prepared as a positive electrode active material. An argyrodite-type crystal, $Li_6PS_5Cl$ solid electrolyte ($D_{50}$=1 μm or less, crystalline), was used as a solid electrolyte. Polytetrafluoroethylene (PTFE, Teflon from Dupont Co.) was prepared as a binder, and carbon black (CB) and carbon nano-fiber (CNF) were prepared as conductive material. The positive electrode active material, the solid electrolyte, the carbon black, the carbon nano-fiber, and the binder were mixed in a weight ratio of 85.5 : 10 : 1.5 : 1.5 : 1.5 in a xylene solvent to form a positive electrode active material composition in the form of sheet, and then the mixture was vacuum dried at 40°C for 8 hours to manufacture a positive electrode layer.

Manufacture of Solid Electrolyte Layer

An acryl-based binder (SX-A334 from Zeon Co. Ltd.) was added to octyl acetate to prepare a binder solution of 4 wt%. The prepared acryl-based binder solution was added to an argyrodite-type crystal, $Li_6PS_5Cl$ solid electrolyte ($D_{50}$=3 μm, crystalline), and Thinky Mixer was used to mix and prepare a slurry. In the slurry, the acryl-based binder was included in an amount of 1.5 parts by weight relative to 98.5 parts by weight of the solid electrolyte. A bar coater was used to coat the prepared slurry on a non-woven fabric, and dried for 10 minutes in a convection oven at 80°C, thereby obtaining a stack. The stack was vacuum dried for 2 hours at 70°C.

Fabrication of All-Solid-State Battery

A stack was prepared by placing the solid electrolyte layer between the positive electrode layer and the negative electrode layer. The prepared stack was subject to isostatic pressing at 80°C for 60 minutes under a pressure of 490 MPa to fabricate an all-solid-state battery. The solid electrolyte layer was sintered through the pressing treatment to improve battery characteristics. A thickness of the sintered solid electrolyte layer was about 45 $\mu$m. A thickness of the pressed positive electrode active material layer was about 120 $\mu$m, a thickness of the coating layer was as discussed above, and a thickness of the solid electrolyte layer was about 120 $\mu$m.

The fabricated all-solid-state battery underwent 10 charge/discharge cycles.

Experimental Example 1: Analysis of Coating Layer

(1) Analysis of Silver Particle Aggregate in Coating Layer

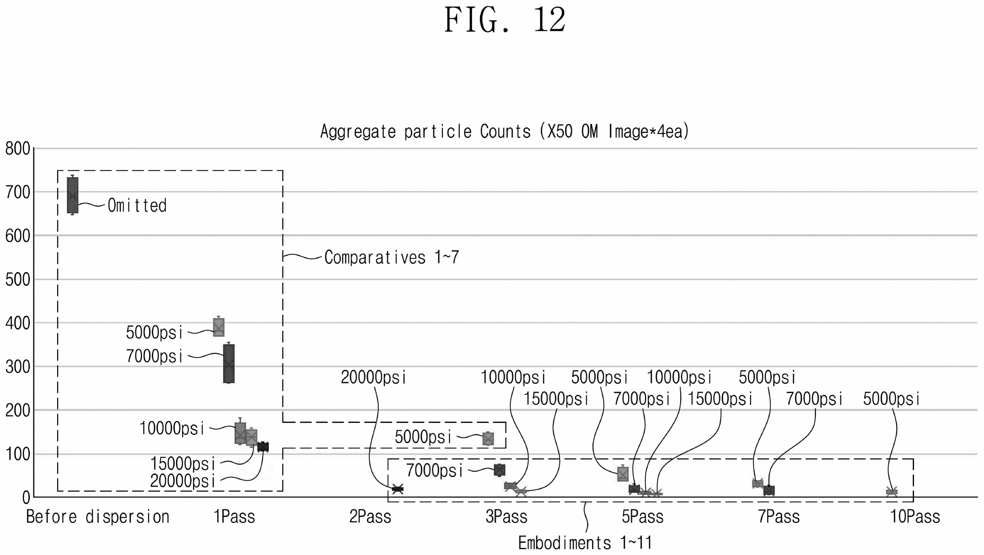

The coating layers according to the examples and the comparative examples were analyzed through a scanning electron microscope (SEM) to count the number of silver particle aggregates, and the results were shown in FIG. 12. The aggregate was defined to refer to a silver particle having a particle diameter of equal to or greater than 200 nm. The definition of the aggregate (or a reference of particle diameter) may be changed depending on a state of silver particle used as an initial coating material.

Referring to FIG. 12, in the case of Comparatives 1 to 7, it may be observed that the number of massive aggregates is relatively large with about 100 or more. In the case of Embodiments 1 to 11, it may be observed that the number of massive aggregates is substantially small with about 80 or less. Therefore, it may be ascertained that an average particle diameter of the silver particle is substantially small and that a size distribution of the silver particle is narrow.

According to an example embodiment of the present disclosure, when the product of pressure measured in psi and the repetition number is greater than 20,000 in the high-pressure dispersion process, the silver particles in the coating layer may have a small size and a narrow distribution.

(2) Analysis of Average Particle Diameter and Standard Deviation of Silver Particle In Coating Layer

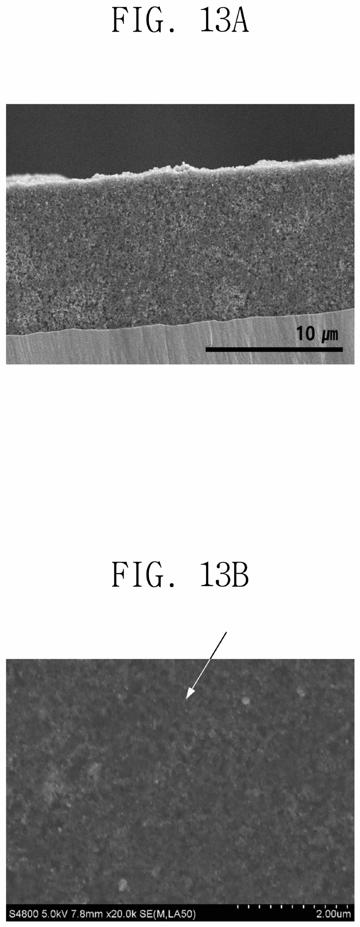

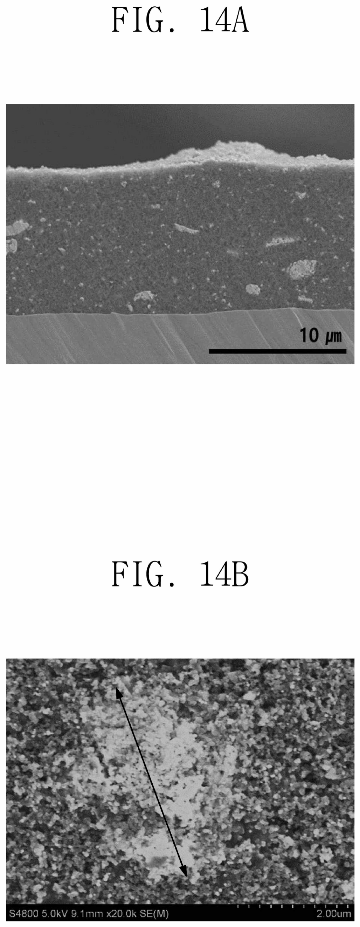

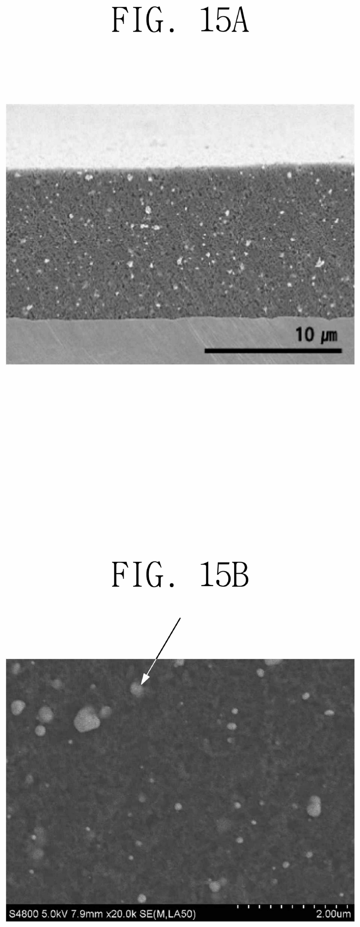

FIGS. 13A and 13B respectively illustrate a cross-sectional SEM image and a surface SEM image showing a coating layer of Embodiment 1. FIGS. 14A and 14B respectively illustrate a cross-sectional SEM image and a surface SEM image showing a coating layer of Comparative 1. FIGS. 15A and 15B respectively illustrate a cross-sectional SEM image and a surface SEM image showing a coating layer of Comparative 7.

Referring to FIGS. 14A and 14B, it may be observed that the silver particle in the coating layer of Comparative 1 has a substantially large size. Referring to FIGS. 15A and 15B, it may be observed that the silver particle in the coating layer of Comparative 7 has a relatively large size. Referring to FIGS. 13A and 13B, it may be observed that the silver particle in the coating layer of Embodiment 1 has a substantially small size.

Table 2 below lists the average particle diameter and the standard deviation of the silver particle in the coating layer in each of Embodiment 1, Comparative 1, and Comparative 7.

Table 2:

|  | Average particle diameter of silver particle | Standard deviation |
|---|---|---|
| Embodiment 1 | 55 nm | 20.1 nm |
| Comparative 1 | 1.25 $\mu$m | 1.52 $\mu$m |
| Comparative 7 | 180 nm | 172 nm |

It may be observed that the silver particle in the coating layer of Embodiment 1 has an average particle diameter of 55 nm, which is substantially fine. It may be observed that the particle diameter of the silver particle has a standard deviation which is 40% of the average particle diameter and that the silver particle has a narrow size distribution.

It may be observed that the silver particle in the coating layer of Comparative 1 has an average particle diameter of 1.25 nm which is substantially large. It may be observed that the particle diameter of the silver particle has standard deviation which is 120% of the average particle diameter and that the silver particle has a wide size distribution.

It may be observed that the silver particle in the coating layer of Comparative 7 has an average particle diameter of 180 nm which is substantially small. It may be observed that the particle diameter of the silver particle has an standard deviation which is 95% of the average particle diameter and that the silver particle has a wide size distribution. However, it may be ascertained that, unlike Comparative 1, the high-pressure dispersion process was performed to result in a small average particle diameter and a narrow size distribution compared to Comparative 1.

(3) Analysis of Average Size and Standard Deviation of Pore in Coating Layer

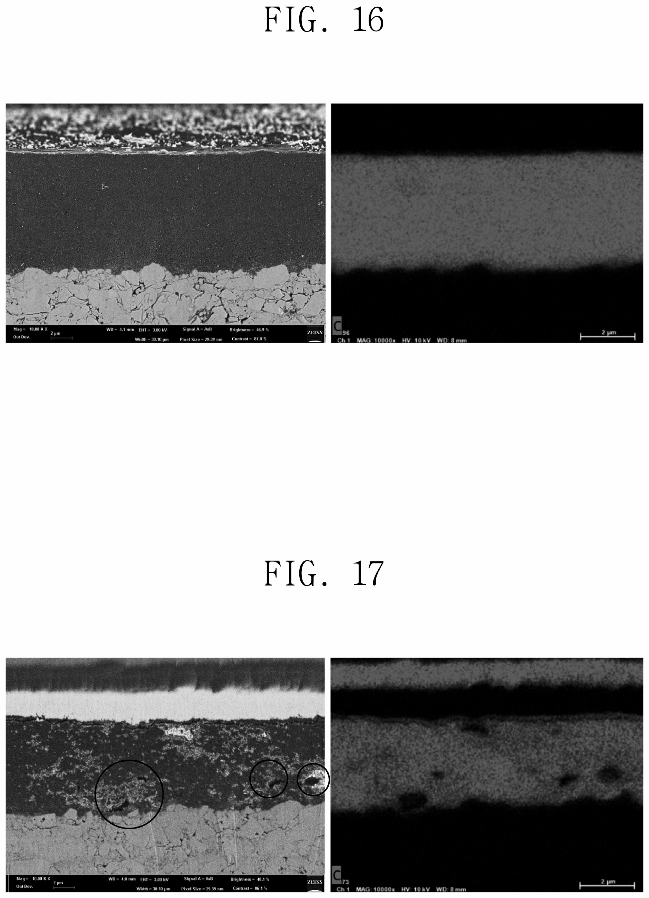

FIG. 16 illustrates a cross-sectional SEM image and a carbon energy-dispersive x-ray spectroscopy (EDS) mapping image of a coating layer in Embodiment 1.

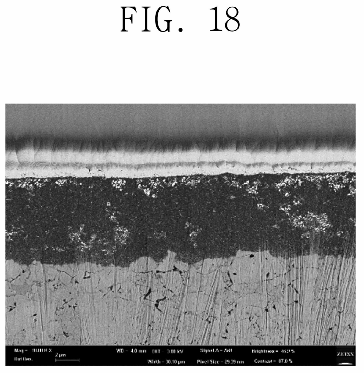

FIG. 17 illustrates a cross-sectional SEM image and a carbon EDS mapping image of a coating layer in Comparative 1. FIG. 18 illustrates a cross-sectional SEM image of a coating layer in Comparative 7.
The data of FIGS. 16 to 18 were analyzed using Image J to measure areas of pores, and a pore size was obtained based on a diameter of a circle having the same area of the pore.
Referring to FIG. 17, it may be observed that the pore in the coating layer of Comparative 1 has a substantially large size. An average pore size is greater than 1 $\mu$m. A standard deviation of the pore size is about 1.5 $\mu$m.
Referring to FIG. 18, it may be observed that the pore in the coating layer of Comparative 7 has a substantially large size. An average pore size is greater than 150 nm. A standard deviation of the pore size is about 145 nm.
Referring to FIG. 16, it may be observed that the pore in the coating layer of Embodiment 1 has a substantially small size. An average pore size is less than 60 nm. A standard deviation of the pore size is about 25 nm.
It may be observed that the coating layer has a substantially small average particle diameter and a substantially narrow size distribution of silver particles. In addition, the pore of Embodiment 1 has a substantially small average size and a substantially narrow size distribution. This may be because that a pressure and a repetition number of the high-pressure dispersion process were appropriately selected in fabrication process of Embodiment 1.
For example, it may be ascertained that, when the high-pressure dispersion process is designed such that the product of a pressure measured in psi and a repetition number is greater than 20,000, the coating layer may be formed to have desired silver particle sizes and pore sizes.

Experimental Example 2: Evaluation of Negative Electrode Layer and All-Solid-State Battery

There was evaluated a lifetime of the all-solid-state battery including the negative electrode layer according to Embodiment 1, Comparative 1, and Comparative 7.
The lifetime evaluation was conducted by setting a pressing device for the all-solid-state battery to have a fastening pressure of 1 MPa. The lifetime evaluation was performed in such a way that the all-solid-state battery was charged at a constant current of 0.33 C until a voltage reached 4.25 V, and then discharged at 0.33 C until a voltage reached 2.5 V, which charge and discharge were repeatedly conducted. The lifetime (charge-discharge efficiency) was calculated according to Equation 3. The lifetime evaluation results are listed in Table 3 below.

Equation 3:

$$\text{Lifetime} = (100^{\text{th}} \text{ discharge capacity} / \text{ initial discharge capacity}) \times 100.$$

Table 3:

|  | Lifetime evaluation (%) |
| --- | --- |
| Embodiment 1 | 87% |
| Comparative 1 | 61% |
| Comparative 7 | 72% |

Referring to Table 3, it may be ascertained that the all-solid-state battery including the coating layer according to Embodiment 1 has desired or improved lifetime characteristics compared to Comparatives 1 and 7. This may be because the silver particles (or pores) in the coating layer have a relatively small average size and a relatively narrow standard deviation.

In a negative electrode for an all-solid-state battery according to examples of the present disclosure, a metal particle in a coating layer may have a relatively small particle diameter and a relatively narrow distribution. Therefore, the negative electrode according to the present example disclosure may improve lifespan and performance of the all-solid-state battery.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

## Claims

1. A negative electrode (200) for an all-solid-state battery (CEL), the negative electrode (200) comprising:

   a negative electrode current collector (210); and
   a coating layer (220) on the negative electrode current collector (210),
   wherein the coating layer (220) comprises at least one carbon-based material and at least one metal particle,
   wherein the metal particle comprises a lithiophilic metal,
   wherein an average particle diameter of the metal particle is in a range of $\geq 10$ nm to $\leq 200$ nm, and
   wherein a standard deviation of a particle diameter of the metal particle is equal to or less than 50% of the average particle diameter.

2. The negative electrode (200) of claim 1, wherein the coating layer (220) further comprises at least one pore,

   where an average size of the pore is in a range of $\geq 10$ nm to $\leq 60$ nm, and
   wherein a standard deviation of the pore is equal to or less than 50% of the average size of the pore.

3. The negative electrode (200) of claim 1 or 2, wherein a porosity of the coating layer (220) gradually increases with increasing distance from the negative electrode current collector (210).

4. The negative electrode (200) of any of the claims 1 to 3, wherein a density of the metal particle in the coating layer (220) gradually decreases with increasing distance from the negative electrode current collector (210).

5. The negative electrode (200) of any of the claims 1 to 4, wherein an average particle diameter of the carbon-based material is greater than the average particle diameter of the metal particle.

6. The negative electrode (200) of any of the claims 1 to 5, wherein the carbon-based material comprises at least one of carbon black, carbon nano-tube, acetylene black, furnace black, ketjen black, graphene, and a combination thereof.

7. The negative electrode (200) of any of the claims 1 to 6, wherein the metal particle comprises at least one of silver (Ag), magnesium (Mg), bismuth (Bi), gold (Au), platinum (Pt), zinc (Zn), and a combination thereof.

8. The negative electrode (200) of any of the claims 1 to 7, further comprising a lithium metal layer between the negative electrode current collector (210) and the coating layer (220).

9. The negative electrode (200) of any of the claims 1 to 8, wherein an average thickness of the coating layer (220) is in a range of $\geq 5$ $\mu$m to $\leq 20$ $\mu$m.

10. A method of preparing a coating slurry for forming the coating layer (220) of the negative electrode (200) according to claim 1, the method comprising:

    forming a first mixture by adding at least one carbon-based material, at least one metal particle, and a first binder to a solvent;
    mixing the first mixture by using a mixer; and
    forming a dispersion by using a high-pressure disperser to allow the first mixture to undergo a high-pressure dispersion process,
    wherein the high-pressure dispersion process comprises:

pressurizing the first mixture at a pressure in a range of ≥ 2,000 psi to ≤ 30,000 psi; and
allowing the pressurized first mixture to pass through a micro-channel,

wherein an average particle diameter of the metal particle in the dispersion is in a range of ≥ 10 nm to ≤ 200 nm, and
wherein a standard deviation of a particle diameter of the metal particle in the dispersion is equal to or less than 50% of the average particle diameter.

11. The method of claim 10, wherein the high-pressure dispersion process is performed twice or more.

12. The method of claim 10 or 11, wherein the high-pressure dispersion process is designed such that the product of the pressure measured in psi and the number of repetition is greater than 20,000.

13. The method of any of the claims 10 to 12, further comprising adding a second binder to the dispersion.

14. The method of any of the claims 10 to 13, wherein the high-pressure dispersion process is performed to crush the metal particle in the first mixture into nanoparticles.

15. The method of any of the claims 10 to 14, wherein the carbon-based material comprises at least one of carbon black, carbon nano-tube, acetylene black, furnace black, ketjen black, graphene, and a combination thereof.

# FIG. 1

CEL

# FIG. 2A

# FIG. 2B

EP 4 734 162 A1

# FIG. 3

# FIG. 4

# FIG. 5

FIG. 6

M

Porosity

Density of metal particle

LPM ⎫
LPM ⎬ AGR

POR
CCM
LPM
POR

300
220
400
210

LPM ⎫
AGR ⎬ MTP

D3
D1

# FIG. 7

SYS

# FIG. 8

Start

Prepare first mixture — S100

Use mixer to mix first mixture — S200

High-pressure disperse first mixture — S300

Prepare second mixture — S400

End

FIG. 9

# FIG. 10

S200

MXT1

MXD

FIG. 11

EP 4 734 162 A1

# FIG. 12

Aggregate particle Counts (X50 OM Image*4ea)

**EP 4 734 162 A1**

# FIG. 13A

# FIG. 13B

36

# FIG. 14A

10 μm

# FIG. 14B

S4800 5.0kV 9.1mm x20.0k SE(M)          2.00um

# FIG. 15A

10 μm

# FIG. 15B

S4800 5.0kV 7.9mm x20.0k SE(M,LA50) 2.00um

# FIG. 16

# FIG. 17

FIG. 18

Europäisches
Patentamt

European
Patent Office

Office européen
des brevets

# EUROPEAN SEARCH REPORT

**Application Number**

EP 25 20 8881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/222605 A1 (OH PILGUN [KR] ET AL) 4 July 2024 (2024-07-04) | 1,3-5,7, 8 | INV.<br>H01M4/04 |
| A | * paragraphs [0053] - [0058]; claims 1-23; figures 1, 2, 9B * | 10-15 | H01M4/133<br>H01M4/134<br>H01M4/36 |
| X | WO 2024/098287 A1 (CONTEMPORARY AMPEREX TECHNOLOGY CO LTD [CN]) 16 May 2024 (2024-05-16) | 1-4,6-9 | H01M4/583<br>H01M10/0525<br>H01M4/38 |
| A | * see EP 4 564 457 A1 *<br>& EP 4 564 457 A1 (CONTEMPORARY AMPEREX TECHNOLOGY HONG KONG LTD [HK]) 4 June 2025 (2025-06-04)<br>* paragraphs [0110] - [0115], [0134]; claims 1-25; figure 4 * | 10-15 | |
| A | JP 2009 252683 A (SUMITOMO CHEMICAL CO) 29 October 2009 (2009-10-29)<br>* claims 1-6 * | 10-15 | |

**TECHNICAL FIELDS SEARCHED (IPC)**

H01M

The present search report has been drawn up for all claims

| Place of search | Date of completion of the search | Examiner |
|---|---|---|
| Munich | 25 February 2026 | Szekely, Noemi Kinga |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 8881

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | Publication date | Patent family member(s) | | Publication date |
|---|---|---|---|---|
| US 2024222605 A1 | 04-07-2024 | CN | 118299573 A | 05-07-2024 |
| | | KR | 20240109489 A | 11-07-2024 |
| | | US | 2024222605 A1 | 04-07-2024 |
| WO 2024098287 A1 | 16-05-2024 | CN | 120019498 A | 16-05-2025 |
| | | EP | 4564457 A1 | 04-06-2025 |
| | | US | 2025070185 A1 | 27-02-2025 |
| | | WO | 2024098287 A1 | 16-05-2024 |
| JP 2009252683 A | 29-10-2009 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020240146455